(19) Europäisches Patentamt
European Patent Office
Office européen des brevets

(11) **EP 2 538 725 A1**

(12) **EUROPEAN PATENT APPLICATION**
published in accordance with Art. 153(4) EPC

(43) Date of publication:
**26.12.2012 Bulletin 2012/52**

(21) Application number: **11742373.1**

(22) Date of filing: **15.02.2011**

(51) Int Cl.:
**H04W 36/38** (2009.01)    **H04W 72/04** (2009.01)

(86) International application number:
**PCT/JP2011/053183**

(87) International publication number:
**WO 2011/099634 (18.08.2011 Gazette 2011/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.02.2010 JP 2010030755**

(71) Applicant: **NTT DOCOMO, INC.**
**Chiyoda-ku**
**Tokyo (JP)**

(72) Inventors:
• **ISHII, Hiroyuki**
  **Tokyo 100-6150 (JP)**
• **IWAMURA, Mikio**
  **Tokyo 100-6150 (JP)**

(74) Representative: **HOFFMANN EITLE**
**Patent- und Rechtsanwälte**
**Arabellastrasse 4**
**81925 München (DE)**

(54) **WIRELESS BASE STATION AND COMMUNICATION CONTROL METHOD**

(57)    A radio base station according to the present invention includes a measurement instruction unit configured to transmit a control signal for instructing the measurement of the radio quality of a cell during communication or a neighboring cell to a mobile station UE; a reception unit configured to receive a measurement result for each carrier of the two or more carriers from the mobile station UE; and a handover control unit configured to instruct the mobile station UE to change a state of communication with the mobile station based on the measurement result, wherein the handover control unit determines whether to allow the mobile station UE to change the state of communication with the mobile station based on the measurement result for a carrier having received the measurement result, and a measurement result for another carrier other than the carrier.

FIG. 10

**Description**

[Technical Field]

The present invention relates to a radio base station and a communication control method.

[Background Art]

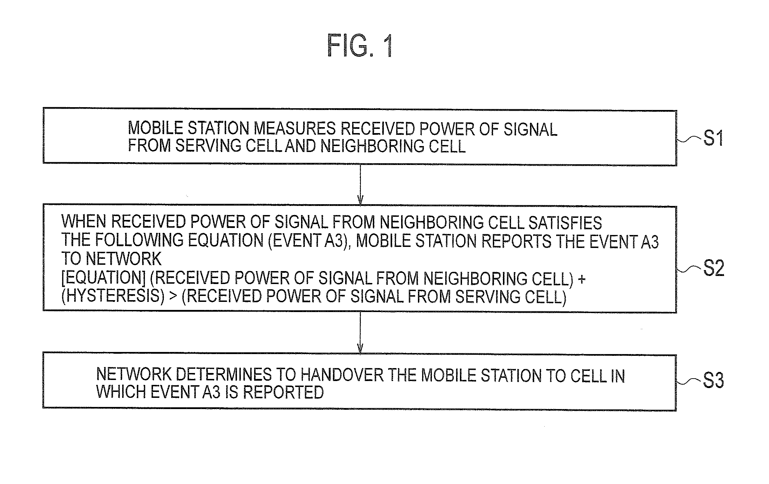

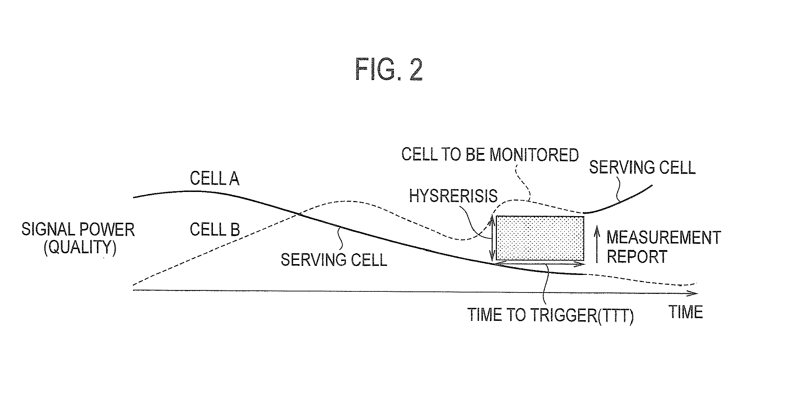

A communication scheme, which is the next generation of a WCDMA (Wideband Code Division Multiplexing Access) scheme, an HSDPA (High-Speed Downlink Packet Access) scheme, an HSUPA (High-Speed Uplink Packet Access) scheme and the like, that is, an LTE (Long Term Evolution) scheme has been discussed in the 3GPP, which is a group aiming to standardize WCDMA, and specification of the LTE scheme is under progress.
Furthermore, an LTE-advanced scheme has been discussed in the 3GPP as the next communication scheme of the LTE scheme. Requirements of the LTE-advanced scheme have been collected in Non Patent Literature 1.
In the LTE-advanced scheme, performing "Carrier aggregation" has been agreed as requirements. When the "Carrier aggregation" is performed, it is possible for a mobile station UE to simultaneously receive downlink signals using a plurality of carriers, or to simultaneously transmit uplink signals using a plurality of carriers. Each carrier when the carrier aggregation is performed is called "Component Carrier".
Meanwhile, in a mobile communication system provided with a plurality of cells, a mobile station UE (User Equipment) is configured to switch a cell and continuously perform communication when moving from one cell to another cell. The cell switching will be referred to as a "handover".
In general, in the mobile communication system, when the mobile station UE moves to a neighboring cell and then the radio quality of a signal from the neighboring cell in the mobile station UE is stronger than the radio quality of a signal from a serving cell, the mobile station UE is configured to be handed over to the neighboring cell.
Note that the radio quality of the signal, for example, includes the received power of the signal. More specifically, the received power of the signal, for example, is the received power (RSRP: Reference Signal Received Power) of a downlink reference signal transmitted from the neighboring cell or the serving cell (refer to TS36.214, V8.3.0 for the definition of the RSRP). Note that as the radio quality of the signal, the received quality (RSRQ: Reference Signal Received Quality) of the downlink reference signal, SIR (RS-SIR) of the downlink reference signal, CQI (Channel Quality Indicator), CSI (Channel State Information), and the like may be used instead of the RSRP.
With reference to Fig. 1 and Fig. 2, an example of a handover procedure will be specifically described. In the following description, the received power (RSRP) of a signal is used as the radio quality of a signal.
As illustrated in Fig. 1, in step S1, a mobile station UE measures the received power of signals from a serving cell and a neighboring cell. Furthermore, the mobile station UE may perform cell search together with the measurement in order to detect an undetected neighboring cell. In the present process, the cell search, and the measurement of the radio quality (the received power) of the serving cell and the neighboring cell may be generally called Measurement.
In step S2, the mobile station UE determines whether the received power of the signal from the neighboring cell satisfies Equation 1 below.
$$\text{received power of signal from neighboring cell} + \text{hysteresis} >$$
$$\text{received power of signal from serving cell} \dots \text{(Equation 1)}$$

When it is determined that Equation 1 is satisfied, the mobile station UE notifies a network of an event A3 for reporting measurement results in step S2.
Specifically, as illustrated in Fig. 2, the mobile station UE measures the received power of signals from a serving cell (a cell A) and a neighboring cell (a cell B) to be monitored, and determines whether to notify the measurement results using "hysteresis [dB]" and "TTT (Time To Trigger) [ms]" notified in advance.
That is, in Fig. 2, when the received power (radio quality) of the signal from the cell B continuously exceeds the received power (radio quality) of the signal from the cell A beyond a predetermined period "TTT" and a "hysteresis", the mobile station UE determines to notify the measurement results (Measurement reports).
Here, the "hysteresis" is a value provided for preventing a handover from the serving cell to the neighboring cell from frequently occurring at a cell boundary, and may have a positive value or a negative value. However, the "hysteresis" is generally set as a negative value.
In step S3, if the network is notified of an event A3, the mobile station UE determines to be handed over to a cell related to the received event A3.
Note that Equation 1 above may be expressed by Equation 2 below. In the case of Equation 2, both the hysteresis and the offset are operated in a hysteresis manner.

$$received\ power\ of\ signal\ from\ neighboring\ cell - hysteresis >$$

$$received\ power\ of\ signal\ from\ serving\ cell + offset\ ...\ (Equation\ 2)$$

When carrier aggregation is performed, the mobile station UE generally performs the measurement of the received power of the signals from the serving cell and the neighboring cell, or the transmission of the Measurement reports for each component carrier.

[Citation List]

[Non Patent Literature]

[NPL 1] 3GPP TS36.913 V8.0.1
[NPL 2] 3GPP TS36.300 V8.5.0 (2008-05)

[Summary of Invention]

[Technical Problem]

As described above, when the carrier aggregation is performed, the measurement of the radio quality of the signals from the serving cell and the neighboring cell, or the transmission of the Measurement reports is performed for each component carrier.

However, when the measurement of the radio quality of the signals from the serving cell and the neighboring cell, or the transmission of the Measurement reports is performed for each component carrier, since the number of Measurement reports is increased by the number of component carriers, overhead of a control signal is increased, resulting in the deterioration of system efficiently.

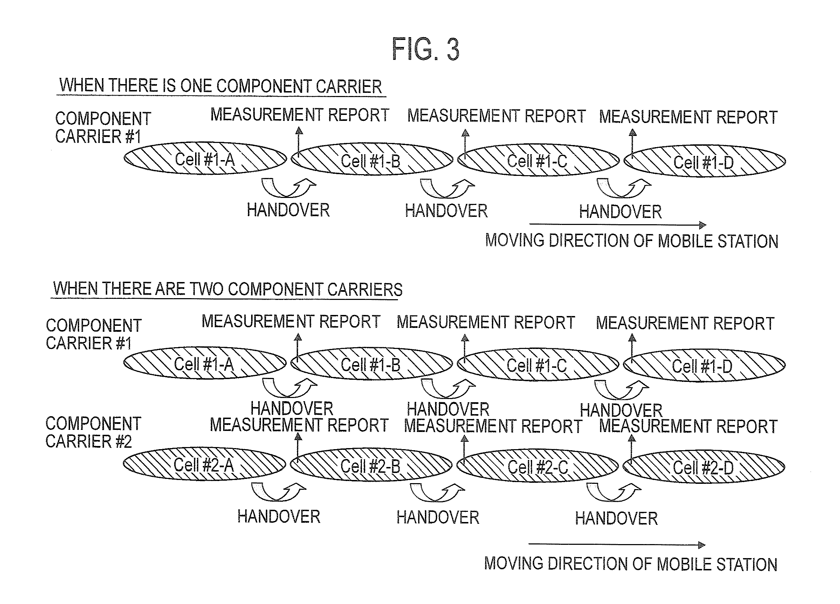

More specifically, the aforementioned problem will be described with reference to Fig. 3. In Fig. 3, a horizontal axis denotes the position of a mobile station UE and a vertical axis denotes a frequency or a carrier.

That is, in the case in which "the number of component carriers is two" in Fig. 3, upper cells indicate cells (Cell #1-A, Cell #1-B, Cell #1-C, and Cell #1-D) of a component carrier #1, and lower cells indicate cells (Cell #2-A, Cell #2-B, Cell #2-C, and Cell #2-D) of a component carrier #2.

For example, as illustrated in Fig. 3, as compared with the case in which the number of component carriers is one, when the number of component carriers is two, the number of Measurement reports is increased twice.

Furthermore, in general, since a plurality of cells, where carrier aggregation is performed, are confined in the same radio base station, carrier aggregation using a cell from a plurality of radio base stations is not performed.

In this case, there is a problem that when a handover between radio base stations is performed, if the handover is not properly performed, communication quality may deteriorate, or communication quality may not be optimized.

More specifically, in the case in which a handover between radio base stations is performed, since it is necessary to perform a handover in consideration of all component carriers having performed carrier aggregation, when the measurement of the radio quality of a signal and the transmission of the Measurement reports are performed for each component carrier, resulting in a problem that communication quality of other component carriers deteriorates, so that it is difficult to efficiently use a system.

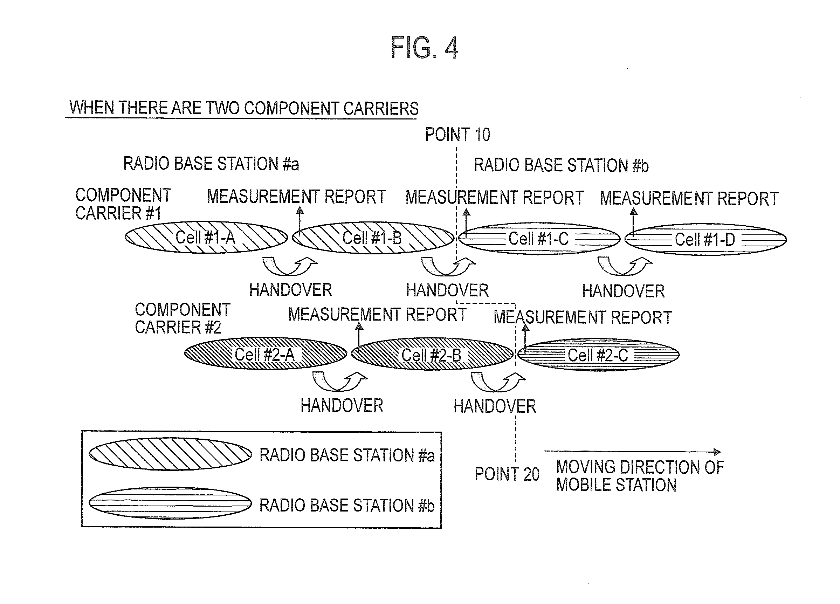

Moreover, more specifically, the aforementioned problem will be described with reference to Fig. 4. In Fig. 4, a horizontal axis denotes the position of a mobile station UE and a vertical axis denotes a frequency or a carrier. Furthermore, Cell #1-A, Cell #1-B, Cell #2-A, and Cell #2-B belong to a radio base station #a, and Cell #1-C, Cell #1-D, and Cell #2-C belong to a radio base station #b.

In the example illustrated in Fig. 4, since a handover point from the radio base station #a to the radio base station #b regarding a component carrier #1 is a Point 10 and a handover point from the radio base station #a to the radio base station #b regarding a component carrier #2 is a Point 20, handover points between the radio base stations are different from each other at the component carrier #1 and the component carrier #2.

In this case, when the mobile station UE performs a handover (a handover from the Cell #1-B to the Cell #1-C) regarding the component carrier #1 at the Point 10, a connection with the Cell #2-B needs to be released.

In this case, instead of a release of the connection with the Cell #2-B, a connection with the Cell #2-C may be added. However, when the radio quality of the Cell #2-C is not good, communication quality may deteriorate.

Alternatively, instead that the mobile station UE performs the handover (the handover from the Cell #1-B to the Cell #1-C) regarding the component carrier #1 at the Point 10, a connection with the Cell #1-B may be released and the connection with the Cell #2-B may be continued.

However, whether the connection with the Cell #1-B is continued or the connection with the Cell #2-B is released, for example, is to be determined based on radio quality. However, when the measurement of the radio quality of signals from a serving cell and a neighboring cell, or the transmission of Measurement reports is performed for each component carrier, it is difficult to measure the radio quality of a plurality of associated component carriers at a proper timing.

Therefore, the present invention has been achieved in view of the above-described problems, and an object thereof is to provide a radio base station and a communication control method, by which it is possible to achieve system efficiency and stability of connectivity by efficiently performing a handover at the time of carrier aggregation.

[Solution to Problem]

A first characteristic of the present embodiment is summarized in that a radio base station, which communicates with a mobile station using two or more carriers, comprising, a measurement instruction unit configured to transmit a control signal for instructing measurement of radio quality of a cell during communication or a neighboring cell to the mobile station, a reception unit configured to receive a measurement result for each carrier of the two or more carriers from the mobile station, and a handover control unit configured to instruct the mobile station to change a state of communication with the mobile station based on the measurement result, in which the handover control unit is configured to determine whether to allow the mobile station to change the state of communication with the mobile station based on the measurement result for a carrier having received the measurement result, and a measurement result for another carrier other than the carrier.

A second characteristic of the present embodiment is summarized in that a communication control method in a radio base station, which communicates with a mobile station using two or more carriers, comprising, a first step of transmitting a control signal for instructing measurement of radio quality of a cell during communication or a neighboring cell to the mobile station, a second step of receiving a measurement result for each carrier of the two or more carriers from the mobile station, and a third step of instructing the mobile station to change a state of communication with the mobile station based on the measurement result, in which in the third step, it is determined whether to allow the mobile station to change the state of communication with the mobile station based on a measurement result for a carrier having received the measurement result, and a measurement result for another carrier other than the carrier.

[Advantageous Effects of Invention]

As described above, according to the present invention, it is possible to provide a radio base station and a communication control method, by which it is possible to achieve system efficiency and stability of connectivity by efficiently performing a handover at the time of carrier aggregation.

[Brief Description of Drawings]

[Fig. 1] Fig. 1 is a diagram for explaining a conventional mobile communication system.
[Fig. 2] Fig. 2 is a diagram for explaining a conventional mobile communication system.
[Fig. 3] Fig. 3 is a diagram for explaining problems in a conventional mobile communication system.
[Fig. 4] Fig. 4 is a diagram for explaining problems in a conventional mobile communication system.
[Fig. 5] Fig. 5 is a diagram illustrating an example of a configuration of a mobile communication system according to a first embodiment of the present invention.
[Fig. 6] Fig. 6 is a diagram illustrating an example of a configuration of the mobile communication system according to the first embodiment of the present invention.
[Fig. 7] Fig. 7 is a diagram illustrating an example of a configuration of the mobile communication system according to the first embodiment of the present invention.
[Fig. 8] Fig. 8 is a diagram illustrating an example of a configuration of the mobile communication system according to the first embodiment of the present invention.
[Fig. 9] Fig. 9 is a functional block diagram illustrating a mobile station UE according to the first embodiment of the present invention.
[Fig. 10] Fig. 10 is a functional block diagram illustrating a radio base station eNB according to the first embodiment of the present invention.

[Fig. 11] Fig. 11 is a flowchart illustrating a communication control method in the mobile station UE of the first embodiment of the present invention.

[Fig. 12] Fig. 12 is a flowchart illustrating a communication control method in the radio base station eNB of the first embodiment of the present invention.

[Fig. 13] Fig. 13 is a diagram for explaining effects of the first embodiment of the present invention.

[Fig. 14] Fig. 14 is a diagram for explaining effects of the first embodiment of the present invention.

[Fig. 15] Fig. 15 is a flowchart illustrating a communication control method in the radio base station eNB of the first embodiment of the present invention.

[Fig. 16] Fig. 16 is a flowchart illustrating a communication control method in the radio base station eNB of the first embodiment of the present invention.

[Fig. 17] Fig. 17 is a flowchart illustrating a communication control method in the radio base station eNB of the first embodiment of the present invention.

[Description of Embodiments]

(Configuration of mobile communication system according to first embodiment of the present invention)

Hereinafter, a mobile communication system according to a first embodiment of the present invention will be described with reference to the accompanying drawings. In all drawings for explaining the present embodiment, the same reference numerals are used to designate elements having the same function, and redundant description will not be repeated.

The mobile communication system according to the present embodiment, for example, is a system employing an LTE-Advanced scheme. That is, the mobile communication system according to the present embodiment includes a radio base station eNB, and a mobile station UE communicating with the radio base station eNB, wherein the mobile station UE and the radio base station eNB perform communication using the LTE-Advanced scheme. Note that the mobile station UE may also be called user equipment.

When the LTE-Advanced scheme is employed, "carrier aggregation" may be employed. That is, in an uplink or a downlink, communication is performed using a plurality of "Component Carriers".

In addition, a "cell performing communication by performing carrier aggregation", that is, a "cell (serving cell) during communication through carrier aggregation" may be called "Primary Cell (Pcell)" or "Secondary Cell (Scell)".

Here, the primary cell is the most important cell in the serving cell performing communication through carrier aggregation, and other cells are secondary cells. That is, communication is performed using carrier aggregation between the mobile station UE and the radio base station eNB by one primary cell and one or more secondary cells.

Furthermore, a frequency of the primary cell may be called "Primary Component Carrier". Furthermore, a frequency of the secondary cell may be called "Secondary Component Carrier".

Here, the "Component Carrier" corresponds to one system carrier in an LTE scheme. That is, in the LTE scheme, communication is performed using one "Component Carrier", but in an LTE-Advanced scheme, communication may be performed using two or more "Component Carriers".

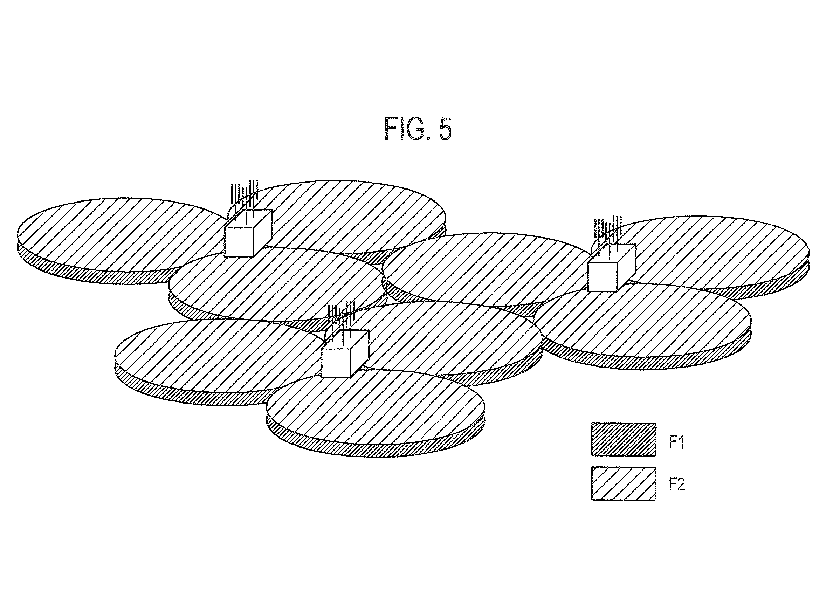

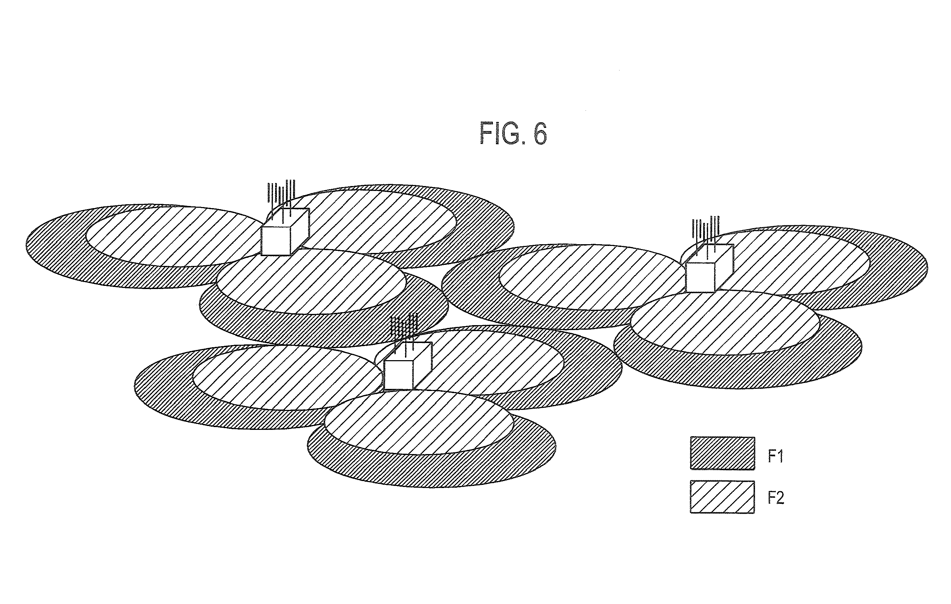

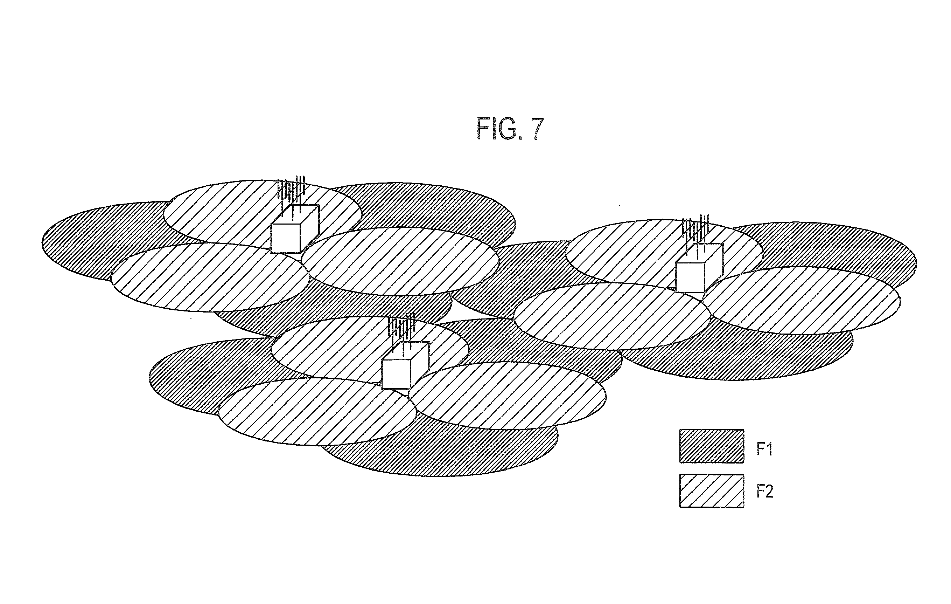

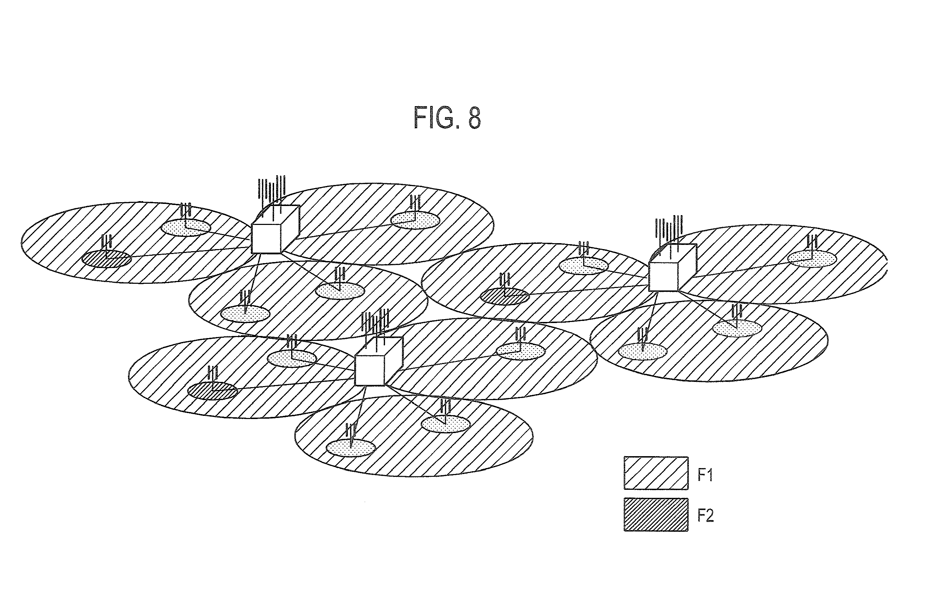

As illustrated in Fig. 5 to Fig. 8, in the mobile communication system according to the present embodiment, cells (a first communication area) using a carrier (a component carrier) of an 800 MHz band (a first frequency band, F1 in Fig. 5 to Fig. 8) and cells (a second communication area) using a carrier (a component carrier) of a 2 GHz band (a second frequency band, F2 in Fig. 5 to Fig. 8) geographically overlap one another. Note that in Figs. 6, 7, and 8, the cells geographically overlap one another at least in part.

Furthermore, although not illustrated in Fig. 5 to Fig. 8, a third frequency band may exist in addition to the first frequency band and the second frequency band. The third frequency band, for example, may be 1.7 GHz band.

Furthermore, a plurality of component carriers may be set in a certain frequency band. It is not necessary to perform carrier aggregation using all the frequency bands, and carrier aggregation may be performed using a part of the frequency bands. Furthermore, when a plurality of component carriers have been set in a certain frequency band, carrier aggregation may be performed using a part of the component carriers in the frequency band.

In the following description, it is assumed that carrier aggregation is performed using a component carrier (hereinafter, referred to as a first carrier) of the first frequency band and a component carrier (hereinafter, referred to as a second carrier) of the second frequency band.

Furthermore, for a component carrier (hereinafter, referred to as a third carrier) of the third frequency band, carrier aggregation is not performed. However, it is assumed that the mobile station UE performs Measurement of a cell included in the third carrier.

Note that when performing the Measurement of the cell included in the third carrier, for example, the radio quality of the cell of the third carrier is good, it is considered that the mobile station UE performs a handover to the cell, or performs carrier aggregation with respect to the cell.

Note that when the mobile station UE has not been instructed to perform the Measurement of the cell included in the third carrier, the mobile station UE may not perform the Measurement of the cell of the third carrier.

Note that since "F1: 800 MHz" and "F2: 2 GHz" illustrated in Fig. 5 to Fig. 8 are examples, carriers (component carriers) of other frequency bands, for example, a carrier of 3.5 GHz band or a carrier of 2.6 GHz band may be used. Furthermore, three or more carriers may be used as well as two carriers.

Meanwhile, the first frequency band and the second frequency band may be called Frequency Band. A frequency band in the LTE scheme or the LTE-Advanced scheme has been defined in "5.5 Operating bands" of 3GPP TS36.101.

For example, an uplink frequency in Band 1 is 1920 MHz to 1980 MHz and an uplink frequency in Band 19 is 830 MHz to 845 MHz.

In the mobile communication system according to the present embodiment, in a downlink, a "physical downlink shared channel (PDSCH)" shared by mobile stations UEs and a "physical downlink control channel (PDCCH)" are used.

The "physical downlink shared channel (PDSCH)" is used to transmit user data, that is, a normal data signal.

Furthermore, the "physical downlink control channel (PDCCH)" is used to notify a control signal such as information (that is, downlink scheduling information) on an ID of a mobile station UE performing communication using the "physical downlink shared channel (PDSCH)" or a transport format of user data, or information (that is, an uplink scheduling grant) on an ID of a mobile station UE performing communication using a "physical uplink shared channel (PUSCH)" or a transport format of user data.

The "physical downlink control channel (PDCCH)" may be called "downlink L1/L2 control channel". Furthermore, the "downlink scheduling information" or the "uplink scheduling grant" may also be collectively called "downlink control information (DCI)".

Furthermore, in the downlink, broadcast information is transmitted after being mapped to "BCCH: Broadcast Control Channel" serving as a logical channel.

Here, a part of information transmitted through the "BCCH" is mapped to "BCH: Broadcast Channel" serving as a transport channel, and the information mapped to the "BCH" is transmitted to a mobile station UE in a corresponding cell through "P-BCH: Physical Broadcast Channel" serving as a physical channel.

Furthermore, the part of information transmitted through the "BCCH" is mapped to "DL-SCH: Downlink Shared Channel" serving as a transport channel, and the information mapped to the "DL-SCH" is transmitted to the mobile station UE in the corresponding cell through the "physical downlink shared channel (PDSCH)" serving as a physical channel.

In the mobile communication system according to the present embodiment, in an uplink, a "physical uplink shared channel (PUSCH)" shared by mobile stations UEs and a "physical uplink control channel (PUCCH)" are used.

The "physical uplink shared channel (PUSCH)" is used to transmit user data, that is, a normal data signal.

Furthermore, the "physical uplink control channel (PUCCH)" is used to transmit downlink quality information (CQI: Channel Quality Indicator), which is to be used in a scheduling process of the "physical downlink shared channel (PUSCH)" or AMCS (Adaptive Modulation and Coding Scheme), and transmission acknowledgement information (Acknowledgement Information) of the "physical downlink shared channel (PDSCH)".

The downlink quality information may also be called CSI (Channel State Indicator) which is a collective indicator of CQI, PMI (Pre-coding Matrix Indicator), or RI (Rank Indicator).

Furthermore, the content of the transmission acknowledgement information is expressed by any one of a positive response (ACK: Acknowledgement) indicating that a transmission signal has been properly received, and a negative response (NACK: Negative Acknowledgement) indicating that the transmission signal has not been properly received.

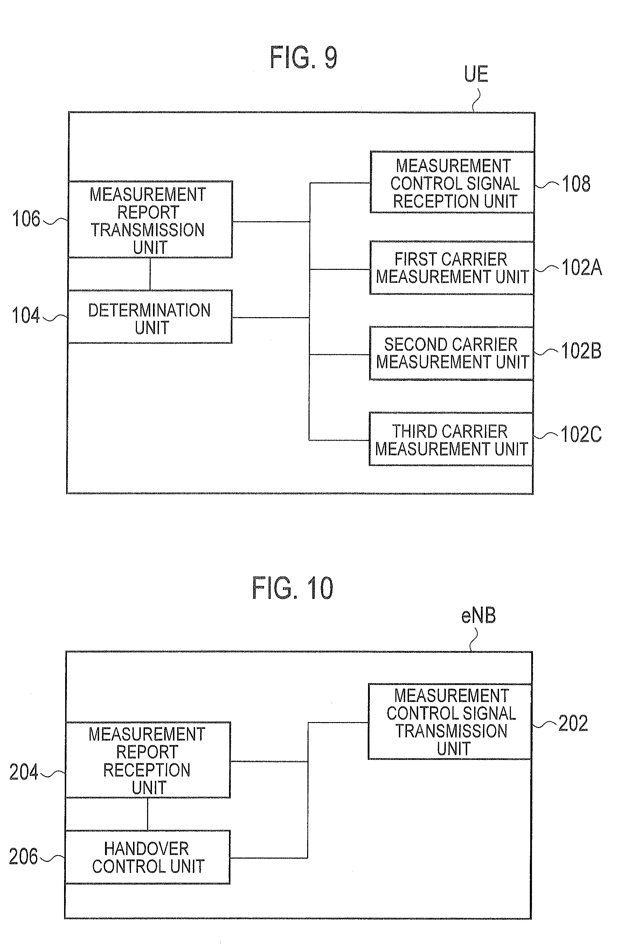

As illustrated in Fig. 9, a mobile station UE includes a first carrier measurement unit 102A, a second carrier measurement unit 102B, a third carrier measurement unit 102C, a determination unit 104, a Measurement report transmission unit 106, and a Measurement control signal reception unit 108.

The first carrier measurement unit 102A, the second carrier measurement unit 102B, the third carrier measurement unit 102C, the determination unit 104, the Measurement report transmission unit 106, and the Measurement control signal reception unit 108 are connected to one another.

The first carrier measurement unit 102A, the second carrier measurement unit 102B, and the third carrier measurement unit 102C may be collectively called a carrier measurement unit 102.

The first carrier measurement unit 102A performs Measurement for a cell of the first carrier.

Here, the Measurement indicates cell search of a neighboring cell, and measurement of radio quality of a neighboring cell or a serving cell.

The radio quality, for example, may include RSRP, RSRQ (Reference Signal Received Quality), or SIR of RS (Reference Signal). Alternatively, the radio quality may include CQI (Channel Quality Indicator) or CSI (Channel State Information).

Then, the first carrier measurement unit 102A transmits a measurement result of the radio quality for the cell of the first carrier, that is, the RSRP, the RSRQ, the SIR of the RS and the like to the determination unit 104 and the Measurement report transmission unit 106.

The second carrier measurement unit 102B performs Measurement for a cell of the second carrier. Then, the second carrier measurement unit 102B transmits a measurement result of the radio quality for the cell of the second carrier, that is, the RSRP, the RSRQ, the SIR of the RS and the like to the determination unit 104 and the Measurement report transmission unit 106.

The third carrier measurement unit 102C performs Measurement for a cell of the third carrier. Then, the third carrier measurement unit 102C transmits a measurement result of the radio quality for the cell of the third carrier, that is, the RSRP, the RSRQ, the SIR of the RS and the like to the determination unit 104 and the Measurement report transmission unit 106.

The determination unit 104 receives the measurement result of the radio quality for the cell of the first carrier from the first carrier measurement unit 102A, the measurement result of the radio quality for the cell of the second carrier from the second carrier measurement unit 102B, and the measurement result of the radio quality for the cell of the third carrier from the third carrier measurement unit 102C.

Then, the determination unit 104 determines whether to transmit a Measurement report for the first carrier.

Hereinafter, a description will be provided for an example of a process in which the determination unit 104 determines whether to transmit the Measurement report. In the following example, as the radio quality of a neighboring cell or a serving cell, the received power of a signal from the cell, that is, RSRP is measured.

For example, the determination unit 104 may perform determination of an event A3 for the first carrier. That is, the determination unit 104 may determine whether the received power (RSRP) of the signal from the neighboring cell satisfies Equation 3 below, and determine to notify a radio base station eNB of a measurement result of the event A3 as a Measurement report when it is determined that Equation 3 is satisfied.

$$\text{received power of signal from neighboring cell + hysteresis >}$$
$$\text{received power of signal from serving cell ... (Equation 3)}$$

When it is determined to notify the radio base station eNB of the Measurement report, the determination unit 104 notifies the Measurement report transmission unit 106 of the determination result.

Note that an operation for "determining to notify the radio base station eNB of the Measurement report" may be replaced with an expression "an event (the event A3 in this case) is triggered".

Alternatively, for example, the determination unit 104 may perform determination of an event A1 for the first carrier. That is, the determination unit 104 may determine whether the received power of the signal from the serving cell satisfies Equation 4 below, and determine to notify the radio base station eNB of a measurement result of the event A1 as a Measurement report when it is determined that Equation 4 is satisfied.

$$\text{received power of signal from serving cell > first threshold}$$
$$\text{value ... (Equation 4)}$$

When it is determined to notify the radio base station eNB of the Measurement report, the determination unit 104 notifies the Measurement report transmission unit 106 of the determination result.

Note that an operation for "determining to notify the radio base station eNB of the Measurement report" may be replaced with an expression "an event (the event A1 in this case) is triggered".

Alternatively, for example, the determination unit 104 may perform determination of an event A2 for the first carrier. That is, the determination unit 104 may determine whether the received power of the signal from the serving cell satisfies Equation 5 below, and determine to notify the radio base station eNB of a measurement result of the event A2 as a Measurement report when it is determined that Equation 5 is satisfied.

$$\text{received power of signal from serving cell < second threshold}$$
$$\text{value ... (Equation 5)}$$

When it is determined to notify the radio base station eNB of the Measurement report, the determination unit 104 notifies the Measurement report transmission unit 106 of the determination result.

Note that an operation for "determining to notify the radio base station eNB of the Measurement report" may be replaced with an expression "an event (the event A2 in this case) is triggered".

Alternatively, for example, the determination unit 104 may perform determination of an event A4 for the first carrier. That is, the determination unit 104 may determine whether the received power of the signal from the serving cell satisfies Equation 6 below, and determine to notify the radio base station eNB of a measurement result of the event A4 as a Measurement report when it is determined that Equation 6 is satisfied.

$$\text{received power of signal from neighboring cell} > \text{fifth threshold value} \dots \text{(Equation 6)}$$

When it is determined to notify the radio base station eNB of the Measurement report, the determination unit 104 notifies the Measurement report transmission unit 106 of the determination result.

Note that an operation for "determining to notify the radio base station eNB of the Measurement report" may be replaced with an expression "an event (the event A4 in this case) is triggered".

Alternatively, for example, the determination unit 104 may perform determination of an event A5 for the first carrier. That is, the determination unit 104 may determine whether the received power of the signal from the serving cell and the received power of the signal from the neighboring cell satisfy Equation 7 below, and determine to notify the radio base station eNB of a measurement result of the event A5 as a Measurement report when it is determined that Equation 7 is satisfied.

$$\text{received power of signal from serving cell} < \text{third threshold value and received power of signal from neighboring cell} > \text{fourth threshold value} \dots \text{(Equation 7)}$$

When it is determined to notify the radio base station eNB of the Measurement report, the determination unit 104 notifies the Measurement report transmission unit 106 of the determination result.

Note that an operation for "determining to notify the radio base station eNB of the Measurement report" may be replaced with an expression "an event (the event A5 in this case) is triggered".

Here, instead of the events A1 to A5, the determination unit 104 may determine whether to transmit Measurement reports for events other than the events A1 to A5, that is, events B1, B2 and the like.

Alternatively, the determination unit 104 may also perform determination of other events, and determine whether to transmit Measurement reports for the events.

Furthermore, the determination unit 104 may also determine to periodically transmit the Measurement report. That is, the determination unit 104 may also instruct the Measurement report transmission unit 106 to periodically transmit the Measurement report.

Alternatively, the determination unit 104 may also perform determination of the transmission of the Measurement report based on the determination of the event as described above, and determine to periodically transmit Measurement reports starting from a transmission timing of the Measurement report.

That is, the determination unit 104 may also instruct the Measurement report transmission unit 106 to transmit the Measurement report based on the determination of the event as described above, and instruct the Measurement report transmission unit 106 to periodically transmit Measurement reports starting from the transmission timing of the Measurement report.

Furthermore, the determination unit 104 determines whether to transmit a Measurement report for the second carrier, and notifies the Measurement report transmission unit 106 of a determination result.

Note that since process for determining whether to transmit the Measurement report regarding the second carrier and notifying the Measurement report transmission unit 106 of the determination result are equal to the processes for the first carrier, a description thereof will not be repeated.

Furthermore, the determination unit 104 determines whether to transmit a Measurement report for the third carrier, and notifies the Measurement report transmission unit 106 of a determination result.

Note that since process for determining whether to transmit the Measurement report for the third carrier and notifying the Measurement report transmission unit 106 of the determination result are equal to the processes for the first carrier, a description thereof will not be repeated.

Note that in the aforementioned example, the determination unit 104 determines whether to transmit a Measurement report for one carrier. However, instead, the determination unit 104 may determine whether to transmit Measurement reports for two or more carriers.

The Measurement report transmission unit 106 receives the measurement result of the radio quality for the cell of the first carrier, the measurement result of the radio quality for the cell of the second carrier, and the measurement result of the radio quality for the cell of the third carrier from the first carrier measurement unit 102A, the second carrier measurement unit 102B, and the third carrier measurement unit 102C, respectively.

Furthermore, the Measurement report transmission unit 106 receives the determination result regarding whether to transmit the Measurement report for the first carrier, the second carrier, or the third carrier from the determination unit 104.

Then, the Measurement report transmission unit 106 transmits the Measurement report to the radio base station eNB based on the determination result regarding whether to transmit the Measurement report for the first carrier, which has been received from the determination unit 104.

Furthermore, the Measurement report transmission unit 106 transmits the Measurement report to the radio base station eNB based on the determination result regarding whether to transmit the Measurement report regarding the second carrier, which has been received from the determination unit 104.

Furthermore, the Measurement report transmission unit 106 transmits the Measurement report to the radio base station eNB based on the determination result regarding whether to transmit the Measurement report for the third carrier, which has been received from the determination unit 104.

Note that in the aforementioned example, the Measurement report transmission unit 106 transmits a Measurement report for one carrier. However, instead, the Measurement report transmission unit 106 may transmit Measurement reports for a plurality of carriers.

Here, when transmitting a corresponding Measurement report, the Measurement report transmission unit 106 may allow a measurement result of radio quality regarding a carrier other than a carrier in which the determination unit 104 has determined to notify the radio base station eNB of a Measurement report to be included in the corresponding Measurement report.

That is, when transmitting a corresponding Measurement report, the Measurement report transmission unit 106 may allow the measurement result of radio quality regarding the carrier, which is different from the carrier in which the determination unit 104 has determined to notify the radio base station eNB of the Measurement report to be included in the corresponding Measurement report.

In other words, the corresponding Measurement report may include the measurement result of the radio quality regarding the carrier different from the carrier in which the determination unit 104 has determined to notify the radio base station eNB of the Measurement report.

For example, when transmitting the Measurement report for the first carrier, the Measurement report transmission unit 106 may allow the measurement result of the radio quality for the second carrier to be included in the Measurement report.

Alternatively, when transmitting the Measurement report for the first carrier, the Measurement report transmission unit 106 may allow the measurement results of the radio quality for the second carrier and the third carrier to be included in the Measurement report.

Here, the measurement result regarding the carrier (hereinafter, referred to as the other carrier), other than the carrier in which the determination unit 104 has determined to notify the radio base station eNB of the Measurement report, may include the ID and radio quality of a cell with good radio quality in the other carrier.

Here, the number of cells with good radio quality may be one or two or more. When two or more cells with good radio quality are notified, the cells may be notified in an ascending order of radio quality. That is, when upper four cells with good radio quality are notified, the IDs and radio quality of the four cells may be notified in an ascending order of the radio quality.

Note that when the other carrier exists in a plural number, the four cells may be four cells of one carrier, or may be four cells of all the carriers. Alternatively, when the other carrier exists in a plural number, the four cells may be four cells of some of the carriers.

Alternatively, the measurement result regarding the carrier (hereinafter, referred to as the other carrier), other than the carrier in which the determination unit 104 has determined to notify the radio base station eNB of the Measurement report, may specifically include a cell, where carrier aggregation is performed in the other carrier, and radio quality of the cell.

Note that the cell, where the carrier aggregation is performed, may be a cell where a link (a connection) has been established between the mobile station UE and the radio base station eNB. That is, the cell, where the carrier aggregation is performed, may be a cell during communication of a carrier by which the carrier aggregation is performed.

Alternatively, the measurement result regarding the carrier (hereinafter, referred to as the other carrier), other than the carrier in which the determination unit 104 has determined to notify the radio base station eNB of the Measurement report, may specifically include a measurement result regarding a carrier by which carrier aggregation is performed. Note that when the carrier by which carrier aggregation is performed exists in a plural number, the other carrier may correspond to the whole or a part of the carriers.

Alternatively, the measurement result regarding the carrier (hereinafter, referred to as the other carrier), other than the carrier in which the determination unit 104 has determined to notify the radio base station eNB of the Measurement report, may specifically include a cell, where carrier aggregation is performed in the other carrier, radio quality of the cell, and the ID and ratio quality of the other cell with good radio quality.

Here, the number of cells with good radio quality may be one or two or more. When two or more cells with good radio quality are notified, the cells may be notified in an ascending order of radio quality.

The ID of the cell may include Physical Cell ID (PCI). The radio quality may include RSRP, RSRQ, or SIR of RS. Alternatively, the radio quality may include CQI or CSI.

Furthermore, the number of cells with good radio quality in the other carrier may be designated to the mobile station UE from the radio base station eNB. The number of cells with good radio quality in the other carrier may be notified to the mobile station UE by the radio base station eNB via the Measurement control signal reception unit 108.

The radio base station eNB designates the number of cells with good radio quality to the mobile station UE, so that unnecessary cell information is reduced, resulting in a reduction of overhead of a control signal (Measurement report).

Furthermore, the other carrier may be designated to the mobile station UE from the radio base station eNB. For example, identification information of the other carrier may be notified to the mobile station UE by the radio base station eNB via the Measurement control signal reception unit 108.

For example, when the Measurement report for the first carrier is transmitted, the radio base station eNB may instruct the mobile station UE such that the Measurement report includes the measurement result of the radio quality for the second carrier.

Here, the second carrier corresponds to the other carrier. Alternatively, when the Measurement report for the first carrier is transmitted, the radio base station eNB may instruct the mobile station UE such that the Measurement report includes the measurement results of the radio quality for the second carrier and the third carrier. Here, the second carrier and the third carrier correspond to the other carrier.

Note that in relation to the cell during communication of the carrier by which the carrier aggregation is performed, the ID and radio quality of the cell may be included in the Measurement report, regardless of an instruction from the radio base station eNB.

Furthermore, in relation to the carrier (a component carrier) by which the carrier aggregation is performed, the ID and ratio quality of a cell with good radio quality in the carrier may be included in the Measurement report, regardless of an instruction from the radio base station eNB.

The radio base station eNB designates the other carrier to the mobile station UE, thereby efficiently acquiring a desired measurement result of the radio quality for a carrier.

That is, instead of measurement results of radio quality for many carriers, the measurement result of the radio quality for a carrier desired by the radio base station eNB is notified by the mobile station UE, resulting in a reduction of overhead of a control signal (Measurement report).

Note that the other carrier may be either a carrier by which carrier aggregation is performed or a carrier by which the carrier aggregation is not performed, or both the carrier by which the carrier aggregation is performed and the carrier by which the carrier aggregation is not performed.

For example, the carrier by which the carrier aggregation is performed is the first carrier and the second carrier in the aforementioned example, and the carrier by which the carrier aggregation is not performed is the third carrier in the aforementioned example.

Furthermore, the other carrier may be included in carriers for which the radio base station eNB instructs the mobile station UE to perform Measurement.

Note that the Measurement report is transmitted from the mobile station UE to the radio base station eNB as an uplink data signal. More specifically, the uplink data signal may include DCCH in terms of a logical channel.

Furthermore, the Measurement report may be transmitted from the mobile station UE to the radio base station eNB using the first carrier. Alternatively, the Measurement report may be transmitted from the mobile station UE to the radio base station eNB using the second carrier. Alternatively, the Measurement report may be transmitted from the mobile station UE to the radio base station eNB using both the first carrier and the second carrier.

As described above, when the Measurement report transmission unit 106 transmits a Measurement report, the measurement result of the radio quality for the carrier other than the carrier in which the determination unit 104 has determined to notify the radio base station eNB of the Measurement report is included in the corresponding Measurement report, so that it is possible for the radio base station eNB to instruct the mobile station UE to perform a handover at a more proper timing in consideration of the states of a plurality of carriers, and an increase in throughput and stability of Mobility characteristics are achieved, resulting in the achievement of system efficiency and stability of connectivity.

Note that as described above, when the Measurement report transmission unit 106 transmits a Measurement report including the measurement result of the radio quality for the carrier (the other carrier), other than the carrier in which the determination unit 104 has determined to notify the radio base station eNB of the Measurement report, Time-to-trigger for the other carrier may be reset.

That is, when the Time-to-trigger has been activated, the Measurement report transmission unit 106 may allow the Time-to-trigger to have an initial value.

That is, when the Time-to-trigger has been activated, the Measurement report transmission unit 106 may allow the Time-to-trigger to have a value of 0.

Furthermore, as described above, when the Measurement report transmission unit 106 transmits a Measurement report including the measurement result of the radio quality for the carrier (the other carrier), other than the carrier in which the determination unit 104 has determined to notify the radio base station eNB of the Measurement report, the Measurement report transmission unit 106 may periodically transmit a Measurement report for the other carrier starting from the transmission timing of the corresponding Measurement report including the measurement result.

The reset of the Time-to-trigger or the periodical transmission of the Measurement report is performed, so that the transmission of the Measurement report for the other carrier is reduced, resulting in a reduction of overhead due to the Measurement report.

The Measurement control signal reception unit 108 receives a control signal associated with the Measurement from the radio base station eNB, and notifies the first carrier measurement unit 102A, the second carrier measurement unit 102B, the third carrier measurement unit 102C, the determination unit 104, and the Measurement report transmission unit 106 of information included in the control signal.

For example, the Measurement control signal reception unit 108 may receive the number of cells with good radio quality in the other carrier from the radio base station eNB, and notify the Measurement report transmission unit 106 of the received information.

Furthermore, the Measurement control signal reception unit 108, for example, may receive the identification information of the other carrier from the radio base station eNB, and notify the Measurement report transmission unit 106 of the received identification information.

As illustrated in Fig. 10, the radio base station eNB includes a Measurement control signal transmission unit 202, a Measurement report reception unit 204, and a handover control unit 206. The Measurement control signal transmission unit 202, the Measurement report reception unit 204, and the handover control unit 206 are connected to one another.

The Measurement control signal transmission unit 202 transmits the control signal associated with the Measurement to the mobile station UE.

The control signal may include identification information (ID) of a carrier for which Measurement is performed, a measurement bandwidth, identification information of an event, the presence or absence of the periodical transmission of a Measurement report, hysteresis or TTT used in the determination of an event, and the like. The mobile station UE performs a process of the Measurement for a carrier designated by the control signal.

Furthermore, the Measurement control signal transmission unit 202 may transmit the number of cells with good radio quality in the other carrier to the mobile station UE as a part of the information included in the control signal.

Furthermore, the Measurement control signal transmission unit 202 may designate the other carrier to the mobile station UE. That is, the Measurement control signal transmission unit 202 may transmit the identification information of the other carrier to the mobile station UE.

The Measurement report reception unit 204 receives a Measurement report transmitted by the mobile station UE.

Here, as described above, the Measurement report may include the measurement result of the radio quality for the carrier (the other carrier), other than the carrier in which it is determined in the mobile station UE to notify the radio base station eNB of the Measurement report.

Note that a description for the measurement result of the radio quality for the other carrier, which is included in the Measurement report, will not be repeated in order to avoid redundancy with the description for the mobile station UE.

The Measurement report reception unit 204 notifies the handover control unit 206 of the Measurement report notified by the mobile station UE.

The handover control unit 206 receives the Measurement report notified by the mobile station UE through the Measurement report reception unit 204. As described above, the Measurement report may include the measurement result of the radio quality for the carrier (the other carrier), other than the carrier in which it is determined in the mobile station UE to notify the radio base station eNB of the Measurement report.

The handover control unit 206 determines whether to instruct the mobile station UE to perform a handover based on the Measurement report, and transmits a control signal (a handover command) for instructing a handover to the mobile station UE when it is determined to instruct the mobile station UE to perform a handover.

Alternatively, the handover control unit 206 determines whether to change the state of communication with the mobile station UE based on the Measurement report, and transmits a control signal Reconfiguration message for instructing a change in the state of communication with the mobile station UE to the mobile station UE when it is determined to change the state of communication with the mobile station UE.

Here, "changing the state of communication with the mobile station UE", for example, may correspond to at least one of the following control operations.

(1) Delete the state of communication with a cell performing carrier aggregation with the mobile station UE.

(2) Delete the state of communication with a secondary cell in the cell performing the carrier aggregation with the mobile station UE.

(3) Delete the state of communication with a primary cell in the cell performing the carrier aggregation with the mobile station UE.

(4) Switch the primary cell and the secondary cell in the cell performing the carrier aggregation with the mobile station UE.

(5) Add a cell not performing the carrier aggregation with the mobile station UE as the secondary cell (that is, establishes the state of communication with the cell not performing the carrier aggregation with the mobile station UE).

(6) Add the cell not performing the carrier aggregation with the mobile station UE as the primary cell (that is, establishes the state of communication with the cell not performing the carrier aggregation with the mobile station UE).

(7) Add the cell not performing the carrier aggregation with the mobile station UE as the primary cell or the secondary cell, and deletes the state of communication with the primary cell or the secondary cell performing the carrier aggregation with the mobile station UE (that is, performs a handover).

Here, the handover control unit 206, for example, may determine whether to perform a handover based on information on the carrier (the other carrier), other than the carrier in which it is determined in the mobile station UE to notify the radio base station eNB of the Measurement report, in addition to information on the carrier in which it is determined in the mobile station UE to notify the radio base station eNB of the Measurement report, which is included in the Measurement report.

Alternatively, the handover control unit 206, for example, may determine whether to change the communication state with the mobile station UE based on information on the carrier (the other carrier), other than the carrier in which it is determined in the mobile station UE to notify the radio base station eNB of the Measurement report, in addition to information on the carrier in which it is determined in the mobile station UE to notify the radio base station eNB of the Measurement report, which is included in the Measurement report.

For example, when a handover destination candidate cell designated by a corresponding Measurement report belongs to the same base station as in a current serving cell, the handover control unit 206 instructs the mobile station UE to perform a handover based on the corresponding Measurement report.

In this case, the handover control unit 206 may maintain the state of communication with a cell, which performs communication in the other carrier through carrier aggregation, that is, a serving cell.

That is, the handover control unit 206 instructs the mobile station UE to be handed over to the handover destination candidate cell designated by the corresponding Measurement report.

Furthermore, for example, when the handover destination candidate cell designated by the corresponding Measurement report belongs to a base station different from that of the current serving cell, the handover control unit 206 determines whether to instruct the mobile station UE to perform a handover based on the measurement result of the radio quality for the carrier in which it is determined in the mobile station UE to notify the radio base station eNB of the Measurement report, and the measurement result of the radio quality for the other carrier.

Then, when it is determined to instruct a handover through the aforementioned determination, the handover control unit 206 instructs the mobile station UE to perform a handover.

Alternatively, for example, when the handover destination candidate cell designated by the corresponding Measurement report belongs to a base station different from that of the current serving cell, the handover control unit 206 determines whether to change the communication state with the mobile station UE based on the measurement result of the radio quality for the carrier in which it is determined in the mobile station UE to notify the radio base station eNB of the Measurement report, and the measurement result of the radio quality for the other carrier.

Then, when it is determined to change the state of communication with the mobile station UE through the aforementioned determination, the handover control unit 206 instructs the mobile station UE to change the state of communication.

Hereinafter, a detailed operation of the handover control unit 206 will be described.

For example, the handover control unit 206 may determine whether to perform a handover or change the state of communication with the mobile station UE based on the radio quality of the handover destination candidate cell designated by a corresponding Measurement report, and the radio quality of a cell during communication through carrier aggregation in the other carrier.

Here, the handover destination candidate cell may be a cell with the optimal radio quality designated by the Measurement report. Here, when the Measurement report is a Measurement report of a frequency, the handover destination candidate cell may be a cell with the optimal radio quality in a carrier with a notified Measurement report. Furthermore, when the Measurement report is a Measurement report of a different frequency, the handover destination candidate cell may be a cell with the optimal radio quality in a carrier different from the carrier with a notified Measurement report.

In addition, the Measurement report may be the event A1, the event A3, or the event A5. Alternatively, the Measurement report may be events other than the event A1, the event A3, or the event A5, for example, may be the events A2, A4, and A6.

That is, when the radio quality of the handover destination candidate cell designated by the corresponding Measurement report is superior to the radio quality of the cell during communication through carrier aggregation in the other carrier, the handover control unit 206 may determine to perform a handover. In other cases, the handover control unit 206 may determine not to perform a handover.

Alternatively, when the radio quality of the handover destination candidate cell designated by the corresponding Measurement report exceeds a predetermined first threshold value and the radio quality of the cell during communication through carrier aggregation in the other carrier is less than a predetermined second threshold value, the handover control unit 206 may determine to perform a handover. In other cases, the handover control unit 206 may determine not to perform a handover.

Furthermore, the handover control unit 206, for example, may determine whether to perform a handover based on the radio quality of a cell with a good radio quality in the carrier in which it is determined in the mobile station UE to notify the radio base station eNB of the Measurement report, and the radio quality of a cell with a good radio quality in the other carrier.

That is, when the radio quality of the cell with good radio quality designated by the corresponding Measurement report is superior than the radio quality of the cell during communication through carrier aggregation in the other carrier, the handover control unit 206 may determine to perform a handover. In other cases, the handover control unit 206 may determine not to perform a handover.

Alternatively, when the radio quality of the cell with good radio quality designated by the corresponding Measurement report exceeds the predetermined first threshold value and the radio quality of the cell during communication through carrier aggregation in the other carrier is less than the predetermined second threshold value, the handover control unit 206 may determine to perform a handover. In other cases, the handover control unit 206 may determine not to perform a handover.

Furthermore, the handover control unit 206, for example, may determine whether to delete the other carrier from carriers, by which carrier aggregation is performed, based on the radio quality of the cell with a good radio quality in the carrier in which it is determined in the mobile station UE to notify the radio base station eNB of the Measurement report, and the radio quality of the cell with a good radio quality in the other carrier.

That is, when the radio quality of the cell with good radio quality in the carrier in which it is determined in the mobile station UE to notify the radio base station eNB of the Measurement report is superior than the radio quality of the cell with good radio quality in the other carrier, the handover control unit 206 may determine whether to delete the other carrier from the carriers by which the carrier aggregation is performed.

Alternatively, when the radio quality of the cell with good radio quality in the carrier in which it is determined in the mobile station UE to notify the radio base station eNB of the Measurement report exceeds the predetermined first threshold value and the radio quality of the cell with good radio quality in the other carrier is less than the predetermined second threshold value, the handover control unit 206 may determine whether to delete the other carrier from the carriers by which the carrier aggregation is performed.

Here, the "deleting the other carrier from the carriers by which the carrier aggregation is performed" may represent the deletion of the state of communication with the cell during communication through carrier aggregation in the other carrier.

Furthermore, the handover control unit 206, for example, may determine whether to delete the carrier in which it is determined in the mobile station UE to notify the radio base station eNB of the Measurement report from the carriers, by which the carrier aggregation is performed, based on the radio quality of the cell with a good radio quality in the carrier in which it is determined in the mobile station UE to notify the radio base station eNB of the Measurement report, and the radio quality of the cell with a good radio quality in the other carrier.

That is, when the radio quality of the cell with good radio quality in the carrier in which it is determined in the mobile station UE to notify the radio base station eNB of the Measurement report is not superior than the radio quality of the cell with good radio quality in the other carrier, the handover control unit 206 may determine whether to delete the carrier in which it is determined in the mobile station UE to notify the radio base station eNB of the Measurement report from the carriers by which the carrier aggregation is performed.

Alternatively, when the radio quality of the cell with good radio quality in the carrier in which it is determined in the mobile station UE to notify the radio base station eNB of the Measurement report is less than the predetermined first threshold value and the radio quality of the cell with good radio quality in the other carrier exceeds the predetermined second threshold value, the handover control unit 206 may determine whether to delete the carrier in which it is determined in the mobile station UE to notify the radio base station eNB of the Measurement report from the carriers by which the carrier aggregation is performed.

Here, the "deleting the carrier in which it is determined in the mobile station UE to notify the radio base station eNB of the Measurement report from the carriers by which the carrier aggregation is performed" may represent the deletion of the state of communication with the cell during communication through carrier aggregation in the carrier.

Furthermore, the handover control unit 206, for example, may determine whether to add the other carrier to the carriers, by which the carrier aggregation is performed, based on at least one of the radio quality of the cell with good radio quality in the carrier in which it is determined in the mobile station UE to notify the radio base station eNB of the Measurement report, and the radio quality of the cell with good radio quality in the other carrier.

Alternatively, for example, the handover control unit 206, for example, may determine whether to add the other carrier to the carriers, by which the carrier aggregation is performed, based on at least one of the radio quality of a handover destination candidate cell in the carrier in which it is determined in the mobile station UE to notify the radio base station eNB of the Measurement report, and the information of the cell with good radio quality in the other carrier.

More specifically, when a cell with the optimal radio quality in the other carrier belongs to a radio base station of the handover destination candidate cell, the handover control unit 206 may determine to set the cell with the optimal radio quality in the other carrier as a cell where carrier aggregation is performed. Here, an operation for setting a certain cell as the cell where carrier aggregation is performed, for example, may be an operation for establishing the state of communication with the certain cell.

In this case, when the state of communication with a plurality of cells is established between a mobile station and a radio base station, it corresponds to a state in which the carrier aggregation is performed. The state of communication may be simply called communication or a connection (a connection state), that is, Connection.

Moreover, specifically, a communication control method in the handover control unit 206 will be described as follows.

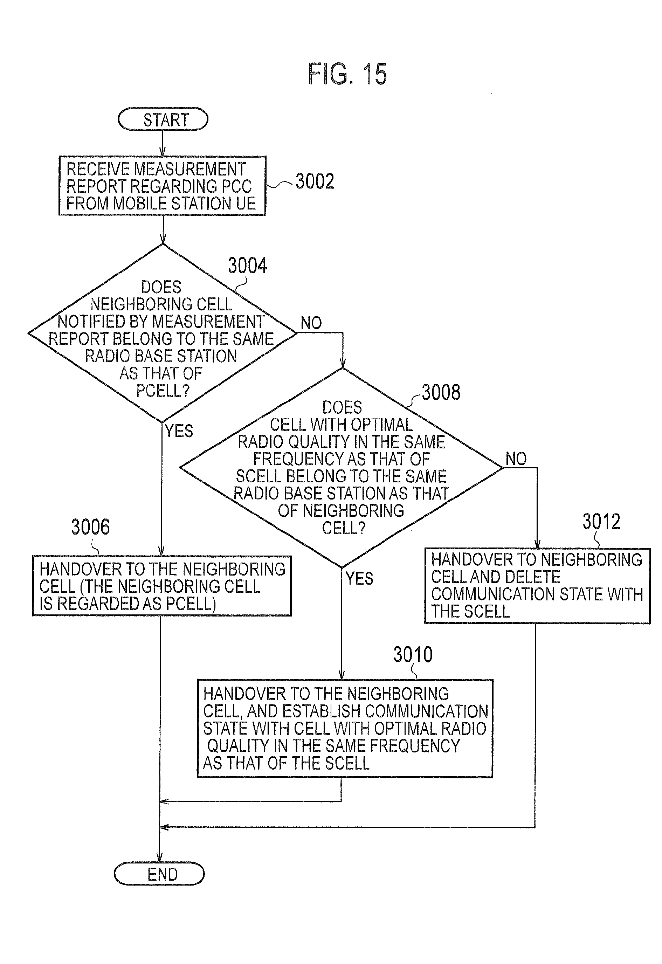

For example, the handover control unit 206 may perform a communication control method as illustrated in Fig. 15.

In the following description, a primary component carrier is written as "PCC" and a primary cell is written as "Pcell". Furthermore, a secondary component carrier is written as "SCC" and a secondary cell is written as "Scell".

Furthermore, in the following description, when the radio base station eNB and the mobile station UE perform communication using carrier aggregation, it is assumed that a communication state of one Pcell and one or more Scells has been established.

At the time of step S3002, the mobile station UE and the radio base station eNB are in a state in which they perform communication using the carrier aggregation.

In step S3002, the radio base station eNB receives a Measurement report for the PCC from the mobile station UE.

Here, the Measurement report, for example, may be an event A3 of the same frequency as that in the PCC. Alternatively, the Measurement report, for example, may be the Pcell, and an event A3 of a frequency different from that in the Pcell.

When the Measurement report of the event A3 is received in the radio base station eNB, a neighboring cell notified by the Measurement report is a cell with radio quality superior than that of the Pcell which is a serving cell, in other words, is a cell with the optimal radio quality.

In step S3004, it is determined whether the neighboring cell notified by the Measurement report belongs to a radio base station of the Pcell.

When the neighboring cell notified by the Measurement report belongs to the radio base station of the Pcell (step S3004: YES), a handover to the neighboring cell is performed (step S3006). That is, the handover control unit 206 performs a process for instructing the mobile station UE to be handed over to the neighboring cell, and performing the handover.

That is, performing the handover to the neighboring cell represents that the neighboring cell is set as the Pcell. Alternatively, performing the handover to the neighboring cell represents that the state of communication as the Pcell is established for the neighboring cell.

When the neighboring cell notified by the Measurement report does not belong to the radio base station of the Pcell (step S3004: NO), the handover control unit 206 determines whether a cell with the optimal radio quality in the same frequency as that in the Scell belong to a radio base station of the neighboring cell notified by the Measurement report, in step S3008.

When the cell with the optimal radio quality in the frequency the same as in the Scell belongs to the radio base station of the neighboring cell notified by the Measurement report (step S3008: YES), the handover control unit 206 allows a handover to the neighboring cell to be performed and establishes the state of communication with the cell with the optimal radio quality in the frequency the same as in the Scell, in step S3010.

Here, since the Measurement report is the Measurement report for the PCC, the frequency the same as in the Scell corresponds to another carrier other than a carrier having received Measurement report.

Meanwhile, when the cell with the optimal radio quality in the frequency the same as in the Scell does not belong to the radio base station of the neighboring cell notified by the Measurement report (step S3008: YES), the handover control unit 206 allows a handover to the neighboring cell to be performed and deletes the state of communication with the Scell in step S3012.

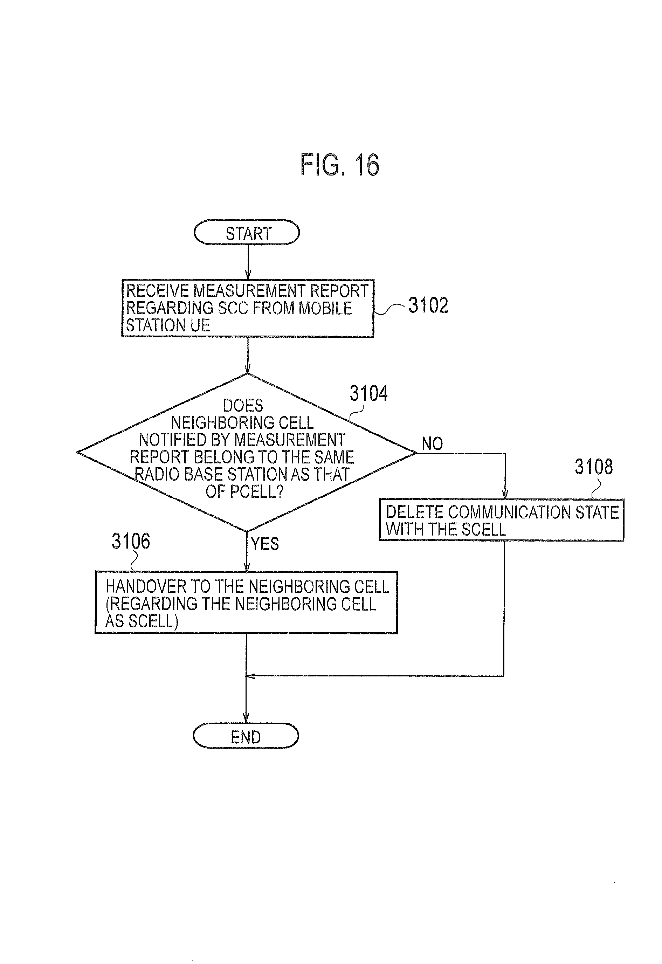

For example, the handover control unit 206 may perform a communication control method as illustrated in Fig. 16.

In the following description, a primary component carrier is written as "PCC" and a primary cell is written as "Pcell". Furthermore, a secondary component carrier is written as "SCC" and a secondary cell is written as "Scell".

Furthermore, in the following description, when the radio base station eNB and the mobile station UE perform communication using carrier aggregation, it is assumed that a communication state of one Pcell and one or more Scells has been established.

At the time of step S3102, the mobile station UE and the radio base station eNB are in a state in which they perform communication using the carrier aggregation.

In step S3102, the radio base station eNB receives a Measurement report for the SCC from the mobile station UE.

Here, the Measurement report, for example, may be an event A6 of the same frequency as that in the SCC. Alternatively, the Measurement report, for example, may be the Scell, and an event A3 of a frequency different from that in the Scell.

When the Measurement report of the event A6 is received in the radio base station eNB, a neighboring cell notified by the Measurement report is a cell with radio quality superior than that of the Scell, which is a serving cell, in a frequency used in the Scell, in other words, is a cell with the optimal radio quality.

When the Measurement report of the event A3 is received in the radio base station eNB, a neighboring cell notified by the Measurement report is a cell with radio quality superior than that of the Scell, which is a serving cell, in other words, is a cell with the optimal radio quality in the carrier.

In step S3104, it is determined whether the neighboring cell notified by the Measurement report belongs to a radio base station of the Pcell.

When the neighboring cell notified by the Measurement report belongs to the radio base station of the Pcell (step S3104: YES), a handover to the neighboring cell is performed (step S3106).

That is, the handover control unit 206 performs a process for instructing the mobile station UE to be handed over to the neighboring cell in the frequency used in the Scell, and performing the handover.

Here, performing the handover to the neighboring cell represents that the neighboring cell is set as the Scell.

Furthermore, the handover is a handover of the same frequency as that in the frequency used in the Scell. Alternatively, performing the handover to the neighboring cell represents that the state of communication as the Scell is established for the neighboring cell.

When the neighboring cell notified by the Measurement report does not belong to the radio base station of the Pcell (step S3104: NO), the handover control unit 206 deletes the state of communication with the Scell in step S3108.

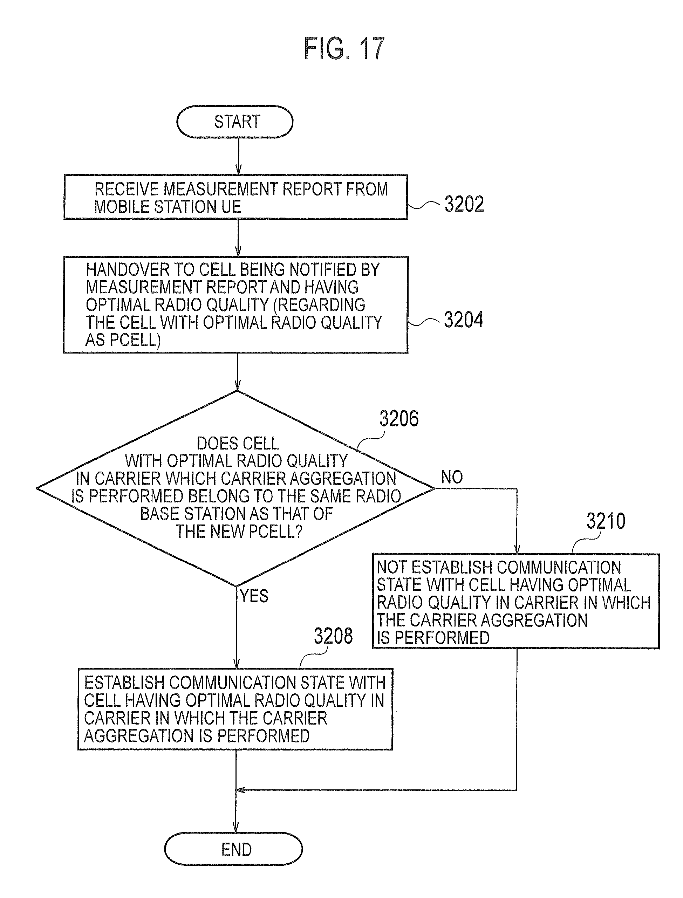

For example, the handover control unit 206 may perform a communication control method as illustrated in Fig. 17.

In the following description, a primary component carrier is written as "PCC" and a primary cell is written as "Pcell". Furthermore, a secondary component carrier is written as "SCC" and a secondary cell is written as "Scell".

Furthermore, in the following description, when the radio base station eNB and the mobile station UE perform communication using carrier aggregation, it is assumed that a communication state of one Pcell and one or more Scells has been established.

At the time of step S3202, the mobile station UE and the radio base station eNB are in a state in which they perform communication using the carrier aggregation.

In step S3202, the radio base station eNB receives a Measurement report from the mobile station UE.

Here, the Measurement report, for example, may be an event A3 of the same frequency as that in the PCC. Alternatively, the Measurement report, for example, may be the Pcell, and an event A3 of a frequency different from that in the Pcell.

When the Measurement report of the event A3 is received in the radio base station eNB, a neighboring cell notified by the Measurement report is a cell with radio quality superior than that of the Pcell which is a serving cell, in other words, is a cell with the optimal radio quality.

In step S3204, the radio base station eNB allows a handover to the cell with the optimal radio quality notified by the Measurement report to be performed. That is, the radio base station eNB sets the cell with the optimal radio quality as the Pcell.

Here, the process for setting the cell with the optimal radio quality as the Pcell may correspond to a process for establishing a connection state as the Pcell for the cell with the optimal radio quality.

In step S3206, the radio base station eNB determines whether a cell with the optimal radio quality in a carrier by which carrier aggregation is performed belongs to a radio base station of the new Pcell.

Here, the cell with the optimal radio quality may be either a cell (Pcell) or a cell (Scell), or may not be the cell (Pcell) and the cell (Scell) before the present process is applied. Here, the Pcell is a serving cell in the PCC and the Scell is a serving cell in the SCC.

Furthermore, the carrier by which the carrier aggregation is performed may be another carrier other than a carrier of a cell set as the Pcell in step S3204. That is, the carrier by which the carrier aggregation is performed is another carrier other than a carrier of a cell set as the Pcell in step S3204 and is a carrier by which the carrier aggregation is performed.

When a cell with the optimal radio quality in the carrier by which the carrier aggregation is performed belongs to a radio base station of the new Pcell (step S3206: YES), the radio base station eNB establishes the state of communication with the cell with the optimal radio quality in the carrier by which the carrier aggregation is performed (step S3208).

That is, the handover control unit 206 sets the cell with the optimal radio quality in the carrier, by which the carrier aggregation is performed, as the Scell. In other words, the handover control unit 206 establishes a connection state as the Scell for the cell with the optimal radio quality in the carrier by which the carrier aggregation is performed.

Here, when the cell with the optimal radio quality in the carrier by which the carrier aggregation is performed is set as the Scell, the handover control unit 206 may delete a current connection state with a cell (Scell) and simultaneously set a cell, which is not the Pcell and the Scell, as the Scell.

Alternatively, when the cell with the optimal radio quality in the carrier by which the carrier aggregation is performed is set as the Scell, the handover control unit 206 may delete a current connection state with a cell (Scell) and simultaneously set a cell (Pcell) as the Scell at the time of step S3202.

Alternatively, when the cell with the optimal radio quality in the carrier by which the carrier aggregation is performed is set as the Scell, the handover control unit 206 may set the Pcell, the Scell, or other cells as a new Scell.

Alternatively, when the cell with the optimal radio quality in the carrier by which the carrier aggregation is performed is set as the Scell, the handover control unit 206 may set a cell (Scell) at the time of step S3202 as a new Scell as is. In this case, the cell (Scell) at the time of step S3202 is the cell with the optimal radio quality in the carrier by which the carrier aggregation is performed, and the Scell is maintained.

Meanwhile, when the cell with the optimal radio quality in the carrier by which the carrier aggregation is performed does not belong to the radio base station of the new Pcell (step S3206: NO), the radio base station eNB does not establish the state of communication with the cell with the optimal radio quality in the carrier by which the carrier aggregation is performed (step S3210).

In this case, in the carrier by which the carrier aggregation is performed, no Scell exist. That is, the connection state of the cell set as the Scell at the time of step S3202 is deleted.

In addition, in the aforementioned example, when the carrier by which the carrier aggregation is performed exists in a plural number, the process illustrated in Fig. 17 may be applied to each carrier by which the carrier aggregation is performed.

Furthermore, the processes of steps S3206, 3208, and 3210 are performed for the carrier by which the carrier aggregation is performed. However, these processes may be performed for a carrier by which the carrier aggregation is not performed.

In addition, in the aforementioned process, when establishing a connection state with a cell, only when the radio quality of the cell exceeds a predetermined threshold value, the connection state with the cell is established. When the radio quality of the cell is less than the predetermined threshold value, even though it is determined to establish the connection state with the cell through the aforementioned process, it may be determined not to establish the connection state with the cell.

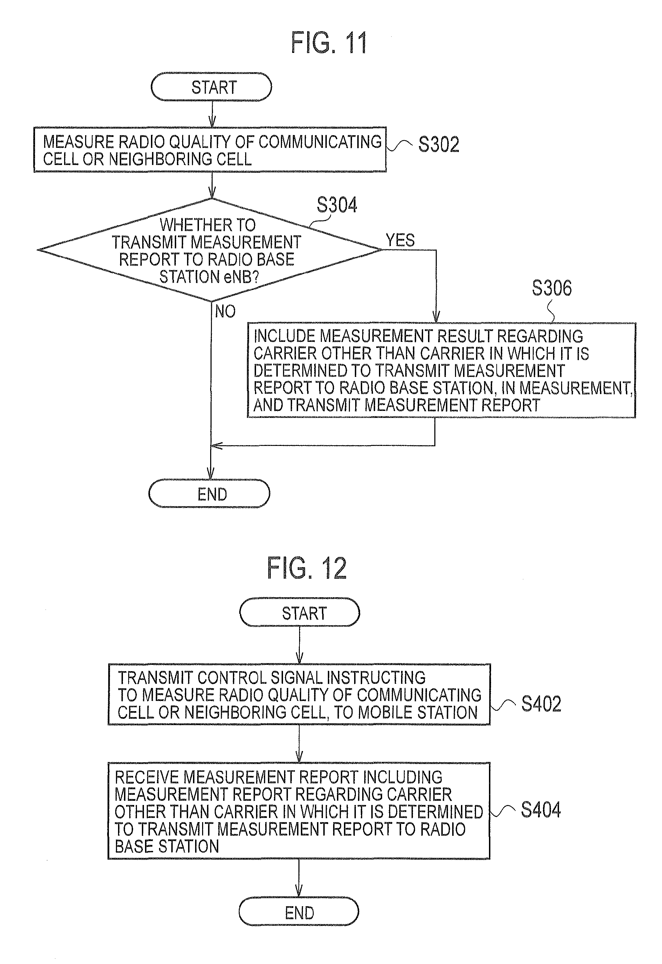

With reference to Fig. 11, a communication control method in the mobile station UE according to the present invention will be described.

In step S302, the mobile station UE measures the radio quality of a cell during communication or a neighboring cell for two or more carriers. Note that the mobile station UE performs Measurement for the two or more carriers according to an instruction of the radio base station eNB.

In step S304, the mobile station UE (the determination unit 104) determines whether to transmit a Measurement report for each of the two or more carriers.

Note that as described above, the transmission of the Measurement report may be triggered by the events (the events A1, A2 and the like) designated by the radio base station eNB, or the Measurement report may be periodically transmitted.

When the mobile station UE determines to transmit the Measurement report (step S304: YES), the mobile station UE transmits a measurement report, being included in Measurement, regarding the carrier (another carrier), other than the carrier in which it is determined to transmit the Measurement report to the radio base station, in step S306.

Furthermore, when it is determined not to transmit the Measurement report (step S304: NO), the mobile station UE completes the process.

Note that in the Measurement instruction from the radio base station eNB to the mobile station UE, the identification information of the other carrier or the number of cells included in the measurement result regarding the other carrier may be designated to the mobile station UE by the radio base station eNB.

With reference to Fig. 12, a communication control method in the radio base station eNB according to the present invention will be described.

In step S402, the radio base station eNB instructs the mobile station UE to measure (to perform Measurement for) the radio quality of a cell during communication or a neighboring cell.

Note that the radio base station eNB may instruct the mobile station UE to perform Measurement for two or more carriers.

In step S404, the radio base station eNB receives a Measurement report transmitted by the mobile station UE.

Here, the Measurement report may include the measurement result regarding the carrier (another carrier), other than the carrier in which it is determined to transmit the Measurement report to the radio base station by the mobile station UE.

That is, the radio base station eNB receives the Measurement report including the measurement result regarding the carrier, other than the carrier in which it is determined to transmit the Measurement report to the radio base station by the mobile station UE.

In addition, , in the Measurement instruction from the radio base station eNB to the mobile station UE in step S402, the radio base station eNB may designate the identification information of the other carrier or the number of cells, which is included in the measurement result for the other carrier, to the mobile station UE.

Hereinafter, a description will be provided for effects when the mobile station UE allows a Measurement report to include the measurement result regarding the carrier (other carrier), other than the carrier in which it is determined to transmit the Measurement report to the radio base station.

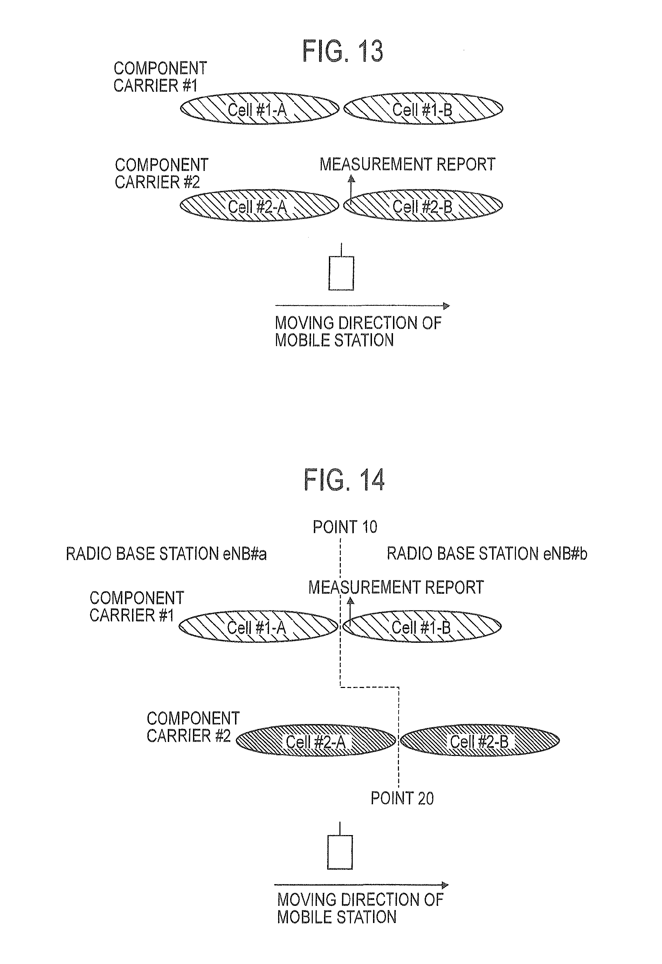

For example, the effects will be described with reference to Fig. 13. In the same figure, a horizontal axis denotes the position of the mobile station UE and a vertical axis denotes a frequency or a carrier. Furthermore, in Fig. 13, the mobile station UE performs carrier aggregation with Cell #1-A and Cell #2-A.

Furthermore, in order to move from the left direction to the right direction of Fig. 13, the mobile station UE is assumed to be handed over to Cell #1-B and Cell #2-B from the Cell #1-A and the Cell #2-A in the near future.

Here, when a Measurement report for a component carrier #2 is transmitted, the mobile station UE according to the present invention notifies a measurement result of the radio quality in a component carrier #1 to the Measurement report.

Note that in the aforementioned example, it is assumed that a Measurement report for the component carrier #1 is not yet transmitted.

In this case, when instructing a handover (a handover to the Cell #2-B from the Cell #2-A) for the component carrier #2, it is also possible for the radio base station eNB to simultaneously instruct a handover (a handover to the Cell #1-B from the Cell #1-A) for the component carrier #1 based on the measurement result of the radio quality in the component carrier #1.

When there is no measurement result of the radio quality in the component carrier #1, since it is not possible to determine whether the handover to the Cell #1-B from the Cell #1-A is proper, it is not possible for the radio base station eNB to perform the aforementioned process.

As a consequence, the measurement report for the component carrier #1 is not necessary for the mobile station UE according to the present invention, resulting in a reduction of overhead of a control signal.

Alternatively, for example, the effects will be described with reference to Fig. 14.

In Fig. 14, a horizontal axis denotes the position of the mobile station UE and a vertical axis denotes a frequency or a carrier. Furthermore, in Fig. 14, the mobile station UE performs carrier aggregation with Cell #1-A and Cell #1-B. Furthermore, the Cell #1-A and Cell #2-A belong to a radio base station eNB #a, and the Cell #1-B and Cell #2-B belong to a radio base station eNB #b.

Furthermore, it is assumed that in order to move from the left direction to the right direction of Fig. 14, the mobile station UE is handed over to the Cell #1-B and the Cell #2-B from the Cell #1-A and the Cell #2-A in the near future.

However, in Fig. 14, a point (a point 10) at which a handover to the Cell #1-B from the Cell #1-A is performed is geographically different from a point (a point 20) at which a handover to the Cell #2-B from the Cell #2-A is performed.

Here, when a Measurement report for a component carrier #1 is transmitted, the mobile station UE according to the present invention notifies a measurement result of the radio quality in a component carrier #2 to the Measurement report.

Note that in the aforementioned example, it is assumed that a Measurement report for the component carrier #2 is not yet transmitted. In this case, it is possible for the radio base station eNB to perform various types of determination based on the measurement result of the radio quality in the component carrier #2, and to perform control based on the determination.

For example, when the radio quality of the Cell #2-A is very good in the measurement result of the radio quality in the component carrier #2, the radio base station eNB may perform a process for deleting the Cell #1-A from a list of cells during communication through carrier aggregation without instructing the handover to the Cell #1-B from the Cell #1-A.

This is because the handover to the Cell #1-B from the Cell #1-A is a handover between radio base stations and thus the Cell #2-A is needed to be deleted, but continuing communication with the Cell #2-A is advantageous in terms of communication quality as compared with the case in which the handover to the Cell #1-B from the Cell #1-A is performed.

Note that the advantage in terms of the communication quality, for example, may represent high throughput, or stability of connectivity in terms of Mobility characteristics.

For example, when the radio quality of the Cell #2-A is poor in the measurement result of the radio quality in the component carrier #2, the radio base station eNB may perform a process for instructing the handover to the Cell #1-B from the Cell #1-A and deleting the Cell #2-A from the list of the cells during communication through the carrier aggregation.

This is because the handover to the Cell #1-B from the Cell #1-A is a handover between radio base stations and thus the Cell #2-A is needed to be deleted, and performing the handover to the Cell #1-B from the Cell #1-A is advantageous in terms of the communication quality as compared with the case in which the communication with the Cell #2-A is continued.

Note that the advantage in terms of the communication quality, for example, may represent high throughput, or stability of connectivity in terms of Mobility characteristics.

For example, when the radio quality of the Cell #2-A is relatively poor and the radio quality of the Cell #2-B is relatively good in the measurement result of the radio quality in the component carrier #2, the radio base station eNB may perform a process for instructing the handover to the Cell #1-B from the Cell #1-A and the handover to the Cell #2-B from the Cell #2-A.

This is because the handover to the Cell #1-B from the Cell #1-A is a handover between radio base stations and thus the Cell #2-A is needed to be deleted, the radio quality of the Cell #2-B serving as a handover destination radio base station is relatively good, and simultaneously instructing the handover to the Cell #2-B from the Cell #2-A and the handover to the Cell #1-B from the Cell #1-A is advantageous in terms of the communication quality.

Note that the advantage in terms of the communication quality, for example, may represent high throughput, or stability of connectivity in terms of Mobility characteristics.

In the aforementioned example, the Measurement report for each carrier for which Measurement is performed is transmitted. However, even when Measurement reports for a plurality of carriers for which Measurement is performed are transmitted, the mobile station, the radio base station, and the communication control method according to the present invention may be applied in the same manner.

In the aforementioned example, the number of carriers by which carrier aggregation is performed is two and the number of carriers by which the carrier aggregation is not performed but for which Measurement is performed is one. However, the number of carriers is an example. For example, even when the number of carriers is not one and two, the mobile station, the radio base station, and the communication control method according to the present invention may be applied.

Furthermore, in the aforementioned example, when a Measurement report is transmitted, the mobile station UE includes, in the Measurement report, the measurement result of the radio quality regarding a carrier other than the carrier in which it is determined to transmit the Measurement report. However, instead, when a control signal for notifying handover completion is transmitted, the mobile station UE may include, in the control signal, the measurement result of the radio quality regarding the other carrier.

In this case, similarly to the aforementioned example, the other carrier may include the carrier other than the carrier in which it is determined to transmit the Measurement report, or a carrier other than a carrier by which a handover is performed.

The control signal may include a handover complete. Details of a process for allowing the handover complete to include the measurement result of the radio quality for the other carrier will not be repeated in order to avoid redundancy with details of the process for allowing the Measurement report to include the measurement result of the radio quality for the other carrier.

Note that when the mobile station UE transmits the handover complete, the Measurement control signal reception unit 108 may receive a handover command from the radio base station eNB, and the Measurement report transmission unit 106 may transmit the handover complete.

The Measurement report is transmitted to a radio base station serving as a handover source. However, the handover complete is transmitted to a radio base station serving as a handover destination.

Thus, the measurement result of the radio quality for the other carrier is included in the handover complete, so that it is possible for the radio base station serving as the handover destination to set carrier aggregation using a cell with a good radio quality immediately after a handover.

The characteristics of the present embodiment as described above may be expressed as follows.

A first characteristic of the present embodiment is summarized in that a radio base station, which communicates with a mobile station using two or more carriers, includes: a Measurement instruction unit configured to transmit a control signal for instructing the measurement of the radio quality of a cell during communication or a neighboring cell to the mobile station; a reception unit configured to receive a measurement result for each carrier of the two or more carriers from the mobile station; and a handover control unit configured to instruct the mobile station to perform a handover based on the measurement result, wherein the handover control unit is configured to determine whether to allow the mobile station to perform a handover based on a measurement result for a carrier determined to be notified to the radio base station, and a measurement result for another carrier other than the carrier.

A second characteristic of the present embodiment is summarized in that a communication control method in a radio base station, which communicates with a mobile station using two or more carriers, includes: a first step of transmitting a control signal for instructing the measurement of the radio quality of a cell during communication or a neighboring cell to the mobile station; a second step of receiving a measurement result for each carrier of the two or more carriers from the mobile station; and a third step of instructing the mobile station to perform a handover based on the measurement result, wherein, in the third step, it is determined whether to allow the mobile station to perform a handover based on a measurement result for a carrier determined to be notified to the radio base station, and a measurement result for another carrier other than the carrier.

Note that the operation of the mobile station UE and the radio base station eNB may be applied to a mobile station or a radio base station and a control station other than a system employing LTE-Advanced. For example, the operation of the mobile station UE and the radio base station eNB may be applied to a mobile station or a radio base station and a control station in LTE, WCDMA, CDMA2000, or WiMAX.

For example, when a mobile station performing communication in a WCDMA system performs the Measurement of two or more carriers of an LTE-Advanced system through Inter-RAT (Radio Access Technology) Measurement, the operation of the mobile station UE may be applied. Furthermore, in this case, a control station (Radio Network Controller) performs the operation of the radio base station eNB according to the present invention. That is, the operation of the radio base station eNB may be applied to the control station.

Alternatively, for example, when a mobile station performing communication in an LTE system performs the Measurement of two or more carriers, the operation of the mobile station UE may be applied. Furthermore, in this case, the operation of the radio base station eNB may be applied to a radio base station eNB of the LTE system.

It is noted that the operation of the above-described the mobile station UE or the radio base station eNB may be implemented by a hardware, may also be implemented by a software module executed by a processor, and may further be implemented by the combination of the both.

The software module may be arranged in a storage medium of an arbitrary format such as RAM(Random Access Memory), a flash memory, ROM (Read Only Memory), EPROM (Erasable Programmable ROM), EEPROM (Electronically Erasable and Programmable ROM), a register, a hard disk, a removable disk, and CD-ROM.

The storage medium is connected to the processor so that the processor can write and read information into and from the storage medium. Such a storage medium may also be accumulated in the processor. The storage medium and processor may be arranged in ASIC. Such the ASIC may be arranged in the mobile station UE or the radio base station eNB. Further, such a storage medium or a processor may be arranged, as a discrete component, in the mobile station UE or the radio base station eNB.

Thus, the present invention has been explained in detail by using the above-described embodiments; however, it is obvious that for persons skilled in the art, the present invention is not limited to the embodiments explained herein. The present invention can be implemented as a corrected and modified mode without departing from the gist and the scope of the present invention defined by the claims. Therefore, the description of the specification is intended for explaining the example only and does not impose any limited meaning to the present invention.

**Claims**

1. A radio base station, which communicates with a mobile station using two or more carriers, comprising:

   a measurement instruction unit configured to transmit a control signal for instructing measurement of radio quality of a cell during communication or a neighboring cell to the mobile station;
   a reception unit configured to receive a measurement result for each carrier of the two or more carriers from the mobile station; and
   a handover control unit configured to instruct the mobile station to change a state of communication with the mobile station based on the measurement result,
   wherein the handover control unit is configured to determine whether to allow the mobile station to change the state of communication with the mobile station based on the measurement result for a carrier having received the measurement result, and a measurement result for another carrier other than the carrier.

2. The radio base station according to claim 1, wherein the state of communication with the mobile station includes at least one of a handover, establishment of a state of communication with a cell communicating with the mobile station, and deletion of the state of communication with the cell communicating with the mobile station.

**3.** The radio base station according to claim 1, wherein
the handover control unit is configured to,

in a case in which a handover destination candidate cell in the carrier having received the measurement result does not belong to a radio base station of a cell during communication, when a radio quality of the handover destination candidate cell is superior than a radio quality of a cell during communication through carrier aggregation in another carrier other than the carrier,
instruct a handover to the handover destination cell, and
in other cases, the handover control unit is configured not to instruct a handover.

**4.** The radio base station according to claim 1, wherein
the handover control unit is configured to,

in a case in which a handover destination candidate cell in the carrier having received the measurement result does not belong to a radio base station of a cell during communication, when a radio quality of the handover destination candidate cell is superior than a radio quality of a cell during communication through carrier aggregation in another carrier other than the carrier,
delete a state of communication with the cell during communication through the carrier aggregation in another carrier other than the carrier.

**5.** The radio base station according to claim 1, wherein
the handover control unit is configured to,

in a case in which a handover destination candidate cell in the carrier having received the measurement result does not belong to a radio base station of a cell during communication, when a radio quality of the handover destination candidate cell is not superior than a radio quality of a cell during communication through carrier aggregation in another carrier other than the carrier,
delete a state of communication with a cell during communication through the carrier aggregation in a carrier determined to be notified to the radio base station.

**6.** The radio base station according to claim 1, wherein
the handover control unit is configured to,

in a case in which a handover destination candidate cell in the carrier having received the measurement result does not belong to a radio base station of a cell during communication, when a cell with optimal radio quality in another carrier other than the carrier belongs to a radio base station of the handover destination candidate cell, establish a state of communication with the cell with optimal radio quality.

**7.** The radio base station according to claim 1, wherein the radio quality includes at least one of received power of a reference signal, received quality of the reference signal, SIR of the reference signal, Channel Quality Indicator, and Channel State Information.

**8.** The radio base station according to claim 1, wherein
the measurement result is, at least one of:

when radio quality of a neighboring cell is superior to radio quality of a cell during communication by a predetermined offset,
when the radio quality of the cell during communication exceeds a first threshold value,
when the radio quality of the cell during communication is inferior to a second threshold value,
when the radio quality of the neighboring cell exceeds a fifth threshold value,
when the radio quality of the cell during communication is inferior to a third threshold value and the radio quality of the neighboring cell exceeds a fourth threshold value, and
when it is a transmission timing when the measurement result is periodically transmitted,

a measurement report reported from the mobile station.

**9.** The radio base station according to claim 1, wherein
a serving cell in the two or more carriers is configured by a primary cell serving as a first serving cell and a secondary cell serving as a second serving cell, and
the handover control unit is configured to,

when a neighboring cell in the carrier having received the measurement result belongs to a radio base station of the primary cell, perform a change in a communication state to change the neighboring cell to the primary cell, when the neighboring cell having received the measurement result does not belong to the radio base station of the primary cell and a cell with optimal radio quality in another carrier other than the carrier having received the measurement result belongs to a radio base station of the neighboring cell, perform a change in a communication state change the neighboring cell to the primary cell and set, as the secondary cell, the cell with optimal radio quality in another carrier other than the carrier having received the measurement result, and when the neighboring cell having received the measurement result does not belong to the radio base station of the primary cell and the cell with optimal radio quality in another carrier other than the carrier having received the measurement result does not belong to the radio base station of the neighboring cell, perform a change in a communication state to change the neighboring cell to the primary cell and delete an original secondary cell in another carrier other than the carrier having received the measurement result.

10. The radio base station according to claim 1, wherein
a serving cell in the two or more carriers is configured by a primary cell serving as a first serving cell and a secondary cell serving as a second serving cell, and
the handover control unit is configured to,

when a neighboring cell in the carrier having received the measurement result belongs to a radio base station of the primary cell, perform a change in a communication state to change the neighboring cell to the secondary cell, and
when the neighboring cell having received the measurement result does not belong to the radio base station of the primary cell, perform a change in a communication state to delete an original secondary cell in the carrier having received the measurement result.

11. The radio base station according to claim 1, wherein
a serving cell in the two or more carriers is configured by a primary cell serving as a first serving cell and a secondary cell serving as a second serving cell, and
the handover control unit is configured to,

change a neighboring cell in the carrier having received the measurement result to the primary cell;
establish a state of communication with a cell with optimal radio quality when the cell with the optimal radio quality in a carrier other than the carrier to which the neighboring cell belongs and a carrier included in the two or more carriers belong to the same radio base station as the neighboring cell; and
perform a change in a communication state not to establish a state of communication with a cell with optimal radio quality, where carrier aggregation is performed, when the cell with the optimal radio quality in the carrier other than the carrier to which the neighboring cell belongs and in the carrier included in the two or more carriers does not belong to the radio base station of the neighboring cell.

12. A communication control method in a radio base station, which communicates with a mobile station using two or more carriers, comprising:

a first step of transmitting a control signal for instructing measurement of radio quality of a cell during communication or a neighboring cell to the mobile station;
a second step of receiving a measurement result for each carrier of the two or more carriers from the mobile station; and
a third step of instructing the mobile station to change a state of communication with the mobile station based on the measurement result, wherein
in the third step, it is determined whether to allow the mobile station to change the state of communication with the mobile station based on a measurement result for a carrier having received the measurement result, and a measurement result for another carrier other than the carrier.

## FIG. 1

MOBILE STATION MEASURES RECEIVED POWER OF SIGNAL
FROM SERVING CELL AND NEIGHBORING CELL — S1

WHEN RECEIVED POWER OF SIGNAL FROM NEIGHBORING CELL SATISFIES
THE FOLLOWING EQUATION (EVENT A3), MOBILE STATION REPORTS THE EVENT A3
TO NETWORK
[EQUATION] (RECEIVED POWER OF SIGNAL FROM NEIGHBORING CELL) +
(HYSTERESIS) > (RECEIVED POWER OF SIGNAL FROM SERVING CELL) — S2

NETWORK DETERMINES TO HANDOVER THE MOBILE STATION TO CELL IN
WHICH EVENT A3 IS REPORTED — S3

EP 2 538 725 A1

## FIG. 2

SIGNAL POWER (QUALITY)

CELL A

CELL B

SERVING CELL

CELL TO BE MONITORED

SERVING CELL

HYSRERISIS

MEASUREMENT REPORT

TIME TO TRIGGER(TTT)

TIME

EP 2 538 725 A1

# FIG. 3

EP 2 538 725 A1

WHEN THERE IS ONE COMPONENT CARRIER

COMPONENT CARRIER #1

MEASUREMENT REPORT    MEASUREMENT REPORT    MEASUREMENT REPORT

Cell #1-A        Cell #1-B        Cell #1-C        Cell #1-D

HANDOVER        HANDOVER        HANDOVER

MOVING DIRECTION OF MOBILE STATION

WHEN THERE ARE TWO COMPONENT CARRIERS

COMPONENT CARRIER #1

MEASUREMENT REPORT    MEASUREMENT REPORT    MEASUREMENT REPORT

Cell #1-A        Cell #1-B        Cell #1-C        Cell #1-D

HANDOVER        HANDOVER        HANDOVER

COMPONENT CARRIER #2

MEASUREMENT REPORT    MEASUREMENT REPORT    MEASUREMENT REPORT

Cell #2-A        Cell #2-B        Cell #2-C        Cell #2-D

HANDOVER        HANDOVER        HANDOVER

MOVING DIRECTION OF MOBILE STATION

# FIG. 4

WHEN THERE ARE TWO COMPONENT CARRIERS

POINT 10

RADIO BASE STATION #a          RADIO BASE STATION #b

COMPONENT     MEASUREMENT REPORT    MEASUREMENT REPORT    MEASUREMENT REPORT
CARRIER #1

Cell #1-A     Cell #1-B     Cell #1-C     Cell #1-D

HANDOVER          HANDOVER          HANDOVER

COMPONENT     MEASUREMENT REPORT    MEASUREMENT REPORT
CARRIER #2

Cell #2-A     Cell #2-B     Cell #2-C

HANDOVER          HANDOVER

Cell #2-A     RADIO BASE STATION #a

RADIO BASE STATION #b

POINT 20    MOVING DIRECTION OF
MOBILE STATION

EP 2 538 725 A1

FIG. 5

F1

F2

FIG. 6

F1

F2

FIG. 7

F1

F2

EP 2 538 725 A1

FIG. 8

## FIG. 9

UE

MEASUREMENT
REPORT
TRANSMISSION
UNIT — 106

DETERMINATION
UNIT — 104

MEASUREMENT
CONTROL SIGNAL
RECEPTION UNIT — 108

FIRST CARRIER
MEASUREMENT UNIT — 102A

SECOND CARRIER
MEASUREMENT UNIT — 102B

THIRD CARRIER
MEASUREMENT UNIT — 102C

## FIG. 10

eNB

MEASUREMENT
REPORT
RECEPTION
UNIT — 204

HANDOVER
CONTROL UNIT — 206

MEASUREMENT
CONTROL SIGNAL
TRANSMISSION
UNIT — 202

# FIG. 11

```
        ( START )
            │
            ▼
┌──────────────────────────────────────┐
│ MEASURE RADIO QUALITY OF COMMUNICATING │──── S302
│ CELL OR NEIGHBORING CELL               │
└──────────────────────────────────────┘
            │
            ▼
         S304
      ╱ WHETHER TO ╲
     ╱ TRANSMIT MEASUREMENT ╲   YES
    ╱ REPORT TO RADIO BASE    ╲─────────┐
     ╲ STATION eNB?           ╱         │
      ╲                      ╱          │
           │NO                          │   S306
           │                            ▼
           │         ┌──────────────────────────────────────────┐
           │         │ INCLUDE MEASUREMENT RESULT REGARDING       │
           │         │ CARRIER OTHER THAN CARRIER IN WHICH IT IS  │
           │         │ DETERMINED TO TRANSMIT MEASUREMENT         │
           │         │ REPORT TO RADIO BASE STATION, IN MEASUREMENT,│
           │         │ AND TRANSMIT MEASUREMENT REPORT            │
           │         └──────────────────────────────────────────┘
           │                            │
           ◄────────────────────────────┘
           │
           ▼
        ( END )
```

# FIG. 12

```
          ( START )
              │
              ▼
┌──────────────────────────────────────────┐
│ TRANSMIT CONTROL SIGNAL INSTRUCTING        │
│ TO MEASURE RADIO QUALITY OF COMMUNICATING  │──── S402
│ CELL OR NEIGHBORING CELL, TO MOBILE STATION │
└──────────────────────────────────────────┘
              │
              ▼
┌──────────────────────────────────────────┐
│ RECEIVE MEASUREMENT REPORT INCLUDING       │
│ MEASUREMENT REPORT REGARDING CARRIER       │
│ OTHER THAN CARRIER IN WHICH IT IS DETERMINED│──── S404
│ TO TRANSMIT MEASUREMENT REPORT TO RADIO    │
│ BASE STATION                               │
└──────────────────────────────────────────┘
              │
              ▼
          ( END )
```

## FIG. 13

COMPONENT
CARRIER #1

Cell #1-A     Cell #1-B

COMPONENT
CARRIER #2

MEASUREMENT REPORT

Cell #2-A     Cell #2-B

MOVING DIRECTION OF
MOBILE STATION

## FIG. 14

POINT 10

RADIO BASE STATION eNB#a          RADIO BASE STATION eNB#b

MEASUREMENT REPORT

COMPONENT
CARRIER #1

Cell #1-A     Cell #1-B

COMPONENT
CARRIER #2

Cell #2-A     Cell #2-B

POINT 20

MOVING DIRECTION OF
MOBILE STATION

# FIG. 15

```
                    ( START )
                        │
                        ▼
            ┌───────────────────────┐
            │ RECEIVE MEASUREMENT   │
            │ REPORT REGARDING PCC  │──~ 3002
            │ FROM MOBILE STATION UE│
            └───────────────────────┘
                        │
                        ▼
                     3004
              DOES
          NEIGHBORING CELL
       NOTIFIED BY MEASUREMENT          NO
      REPORT BELONG TO THE SAME ─────────────┐
          RADIO BASE STATION                 │
             AS THAT OF                       │
               PCELL?                         ▼
                        │                  3008
                      YES              DOES
                        │         CELL WITH OPTIMAL
                        │      RADIO QUALITY IN THE SAME
                        │       FREQUENCY AS THAT OF          NO
                        │      SCELL BELONG TO THE SAME ───────────┐
      3006              │      RADIO BASE STATION AS THAT          │
        │               │        OF NEIGHBORING                    │
        ▼               │             CELL?                   3012 │
┌───────────────────┐   │               │                      ▼
│HANDOVER TO THE    │   │              YES           ┌──────────────────────┐
│NEIGHBORING CELL   │   │               │            │HANDOVER TO NEIGHBORING│
│(THE NEIGHBORING   │   │               │            │CELL AND DELETE        │
│CELL IS REGARDED   │   │               │            │COMMUNICATION STATE    │
│AS PCELL)          │   │               │            │WITH THE SCELL         │
└───────────────────┘   │               │            └──────────────────────┘
        │               │            3010                       │
        │               │               │                       │
        │               │               ▼                       │
        │           ┌──────────────────────────────┐            │
        │           │HANDOVER TO THE NEIGHBORING     │           │
        │           │CELL, AND ESTABLISH COMMUNICATION│          │
        │           │STATE WITH CELL WITH OPTIMAL RADIO│         │
        │           │ QUALITY IN THE SAME FREQUENCY   │          │
        │           │AS THAT OF THE SCELL            │           │
        │           └──────────────────────────────┘            │
        │                       │                                │
        │                       └────────────────┬───────────────┘
        │                                         │
        │◄────────────────────────────────────────┘
        ▼
    ( END )
```

# FIG. 16

START

RECEIVE MEASUREMENT REPORT
REGARDING SCC FROM MOBILE
STATION UE — 3102

DOES
NEIGHBORING CELL
NOTIFIED BY MEASUREMENT
REPORT BELONG TO THE SAME
RADIO BASE STATION AS THAT
OF PCELL? — 3104

NO

3108

DELETE COMMUNICATION STATE
WITH THE SCELL

YES

3106

HANDOVER TO THE NEIGHBORING CELL
(REGARDING THE NEIGHBORING CELL
AS SCELL)

END

# FIG. 17

```
                    ┌─────────────┐
                    │    START    │
                    └─────────────┘
                           │
                           ▼
        ┌──────────────────────────────────┐
        │ RECEIVE MEASUREMENT REPORT FROM   │      ～3202
        │ MOBILE STATION UE                 │
        └──────────────────────────────────┘
                           │
                           ▼
        ┌──────────────────────────────────┐
        │ HANDOVER TO CELL BEING NOTIFIED BY│
        │ MEASUREMENT REPORT AND HAVING     │
        │ OPTIMAL RADIO QUALITY (REGARDING  │      ～3204
        │ THE CELL WITH OPTIMAL RADIO QUALITY│
        │ AS PCELL)                         │
        └──────────────────────────────────┘
                           │
                           ▼
                                        3206
              DOES CELL
         WITH OPTIMAL RADIO QUALITY
    IN CARRIER WHICH CARRIER AGGREGATION        NO
    IS PERFORMED BELONG TO THE SAME RADIO ──────────┐
         BASE STATION AS THAT OF                     │
           THE NEW PCELL?                            │
                           │                         │      3210
                           │ YES                     ▼
                           │          ┌──────────────────────────────┐
                           │          │NOT ESTABLISH COMMUNICATION    │
                           │          │STATE WITH CELL HAVING OPTIMAL │
                           │          │RADIO QUALITY IN CARRIER IN WHICH│
                           │          │THE CARRIER AGGREGATION        │
                           │   3208   │IS PERFORMED                   │
                           │          └──────────────────────────────┘
                           ▼                         │
        ┌──────────────────────────────────┐         │
        │ ESTABLISH COMMUNICATION STATE WITH│         │
        │ CELL HAVING OPTIMAL RADIO QUALITY IN│       │
        │ CARRIER IN WHICH THE CARRIER      │         │
        │ AGGREGATION IS PERFORMED          │         │
        └──────────────────────────────────┘         │
                           │◄────────────────────────┘
                           ▼
                    ┌─────────────┐
                    │     END     │
                    └─────────────┘
```

35

<div align="center">**INTERNATIONAL SEARCH REPORT**</div>

| | International application No. |
|---|---|
| | PCT/JP2011/053183 |

**A. CLASSIFICATION OF SUBJECT MATTER**
*H04W36/38(2009.01)i, H04W72/04(2009.01)i*

According to International Patent Classification (IPC) or to both national classification and IPC

**B. FIELDS SEARCHED**

Minimum documentation searched (classification system followed by classification symbols)
H04W4/00-99/00

Documentation searched other than minimum documentation to the extent that such documents are included in the fields searched
Jitsuyo Shinan Koho          1922-1996     Jitsuyo Shinan Toroku Koho     1996-2011
Kokai Jitsuyo Shinan Koho    1971-2011     Toroku Jitsuyo Shinan Koho     1994-2011

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | "Measurement modeling in CA", 3GPP TSG-RAN WG2 Meeting #68 R2-096766, 2009.11 | 1,2,7,8,12<br>3-6,9-11 |
| Y | "Measurement in CA", 3GPP TSG RAN WG2 Meeting #68 R2-096504, 2009.11 | 3-6,9-11 |
| A | "Cell change in CA", 3GPP TSG RAN WG2 Meeting #67bis R2-095481, 2009.10 | 1-12 |
| A | "Measurements for carrier aggregation", 3GPP TSG-RAN WG2 #68 bis Tdoc R2-100122, 2010.01 | 1-12 |
| A | WO 2010/016255 A1 (Sharp Corp.), 11 February 2010 (11.02.2010), paragraphs [0020] to [0058] (Family: none) | 1-12 |

☐ Further documents are listed in the continuation of Box C.          ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 May, 2011 (06.05.11) | 17 May, 2011 (17.05.11) |

| Name and mailing address of the ISA/<br>Japanese Patent Office | Authorized officer |
|---|---|
| Facsimile No. | Telephone No. |

Form PCT/ISA/210 (second sheet) (July 2009)